# EUROPEAN PATENT APPLICATION

(11) **EP 4 484 911 A1**
(43) Date of publication of application: **01.01.2025**
(21) Application number: 22933878.5
(22) Date of filing: 28.12.2022
(51) Int. Cl.: G01L 5/00

(54) **DETECTION DEVICE**

(30) Priority: 30.03.2022 JP 2022057382
(71) Applicant: Alps Alpine Co., Ltd., Tokyo 145-8501 (JP)
(72) Inventor: HIRANO, Shinji, Tokyo 145-8501 (JP); NISHIYAMA, Teru, Tokyo 145-8501 (JP)
(74) Representative: Schmitt-Nilson Schraud Waibel Wohlfrom Patentanwälte Partnerschaft mbB
(86) International application number: PCT/JP2022/048614
(87) International publication number: WO 2023/188665

(57) **Abstract**

A detection device is provided in which rotation of a strain generator is suppressed.

A detection device includes a strain generator that includes a body including a first end and a second end, and a through-hole penetrating through the body in a direction that connects a first side on which the first end is located and a second side on which the second end is located, where a bolt of a fastening mechanism is to be inserted into the through-hole; a strain sensor that is configured to detect strain of the strain generator caused by a fastening axial force that is applied by the fastening mechanism in an extending direction of the through-hole; and a casing that is configured to house at least a part of the body of the strain generator along a first outer side surface of the body. The strain generator includes a projection that projects outward, in a plan view, of the first outer side surface of the body. The casing includes a facing wall that faces the first outer side surface. The facing wall includes a recess that is recessed outward in the plan view and is configured to house the projection.

## Description

### TECHNICAL FIELD

The present disclosure relates to a detection device.

### BACKGROUND ART

An existing load cell includes a first strain generator and at least one second strain generator including a strain sensor. The first strain generator includes: a first cylindrical member including a first flange and a first screw thread at the interior thereof; a second cylindrical member disposed concentrically with the first member and including a second flange and a second screw thread at the exterior thereof; a first structure having a cylindrical shape and including a third screw thread, at the exterior thereof, that is to be screwed with the first screw thread; a second structure having a cylindrical shape and including a fourth screw thread, at the interior thereof, that is to be screwed with the second screw thread; and a third structure having elasticity and provided between the first structure and the second structure. In the first strain generator, the first member is mounted at the exterior of the first structure, and the second member is mounted at the interior of the second structure. In the at least one second strain generator, a first end thereof is provided between the first structure and the first flange, and a second end is provided between the second structure and the second flange (see, for example, Patent Literature 1).

### CITATION LIST

### PATENT LITERATURE

Patent Literature 1: Japanese Laid-Open Patent Application No. 2020-148494

### SUMMARY OF THE INVENTION

### TECHNICAL PROBLEM

In the existing load cell, the first screw thread and the third screw thread are screwed together, and the first member is mounted at the exterior of the first structure of the first strain generator. However, when the screw between the first member and the first structure of the first strain generator loosens, the first strain generator may rotate relative to the first member. When the first strain generator rotates, there may arise issues, such as disconnection of interconnects of the strain sensor, reduction in detection accuracy due to rattling thereof relative to the first member, and the like.

In view of the above, it is an object to provide a detection device in which rotation of the strain generator is suppressed.

### SOLUTION TO THE PROBLEM

A detection device according to an embodiment of the present disclosure includes: a strain generator that includes a body including a first end and a second end, and a through-hole penetrating through the body in a direction that connects a first side on which the first end is located and a second side on which the second end is located, where a bolt of a fastening mechanism is to be inserted into the through-hole; a strain sensor that is configured to detect strain of the strain generator caused by a fastening axial force that is applied by the fastening mechanism in an extending direction of the through-hole; and a casing that is configured to house at least a part of the body of the strain generator along a first outer side surface of the body. The strain generator includes a projection that projects outward, in a plan view, of the first outer side surface of the body. The casing includes a facing wall that faces the first outer side surface. The facing wall includes a recess that is recessed outward in the plan view and is configured to house the projection.

### ADVANTAGEOUS EFFECTS OF THE INVENTION

It is possible to provide a detection device in which rotation of a strain generator is suppressed.

### BRIEF DESCRIPTION OF THE DRAWINGS

[FIG. 1] FIG. 1 is a perspective view illustrating a detection device 100 of Embodiment 1.
[FIG. 2] FIG. 2 is a view illustrating an exploded state of the detection device 100.
[FIG. 3] FIG. 3 is a view illustrating a cross section taken along line A-A in FIG. 1.
[FIG. 4] FIG. 4 is a view illustrating a cross section taken along line B-B in FIG. 1.
[FIG. 5] FIG. 5 is a view illustrating a strain generator 120 and a strain sensor 130.
[FIG. 6] FIG. 6 is a view illustrating the strain generator 120 and the strain sensor 130.
[FIG. 7] FIG. 7 is a view illustrating a state in which an upper casing 110U is removed from the detection device 100 and a sealing resin 150 is omitted.
[FIG. 8] FIG. 8 is a view illustrating a state in which the strain generator 120 and the strain sensor 130 are disposed in a lower casing 110L.
[FIG. 9] FIG. 9 is a view illustrating a state in which the strain generator 120 and the strain sensor 130 are disposed in the lower casing 110L.
[FIG. 10] FIG. 10 is a view illustrating an example of a usage state of the detection device 100.
[FIG. 11A] FIG. 11A is a view illustrating a detection device 100A of a first modified example of Embodiment 1.
[FIG. 11B] FIG. 11B is a view illustrating an exploded state of the detection device 100A.
[FIG. 12A] FIG. 12A is a view illustrating a detection device 100B of the first modified example of Embodiment 1.
[FIG. 12B] FIG. 12B is a view illustrating an exploded state of the detection device 100B.
[FIG. 13A] FIG. 13A is a view illustrating a strain generator 120C of a third modified example.
[FIG. 13B] FIG. 13B is a view illustrating the strain generator 120C of the third modified example.
[FIG. 14A] FIG. 14A is a view illustrating a strain generator 120D of a fourth modified example.
[FIG. 14B] FIG. 14B is a view illustrating the strain generator 120D of the fourth modified example.
[FIG. 15A] FIG. 15A is a view illustrating a strain generator 120E of a fifth modified example.
[FIG. 15B] FIG. 15B is a view illustrating the strain generator 120E of the fifth modified example.
[FIG. 16] FIG. 16 is a perspective view illustrating a detection device 200 of Embodiment 2.
[FIG. 17] FIG. 17 is a perspective view illustrating the detection device 200 of Embodiment 2.
[FIG. 18] FIG. 18 is a view illustrating an exploded state of the detection device 200.
[FIG. 19] FIG. 19 is a view illustrating the exploded state of the detection device 200.
[FIG. 20] FIG. 20 is a view illustrating a cross section taken along line C-C in FIG. 16.
[FIG. 21] FIG. 21 is a view illustrating the cross section taken along line C-C in FIG. 16.
[FIG. 22] FIG. 22 is a view illustrating a cross section taken along line D-D in FIG. 16.
[FIG. 23] FIG. 23 is a view illustrating a state in which the upper casing 110U is removed from the detection device 200 and the sealing resin 150 is omitted.
[FIG. 24] FIG. 24 is a partially enlarged view of FIG. 23.
[FIG. 25] FIG. 25 is a view illustrating a simulation result obtained by calculating a strain distribution when a fastening axial force is applied to a strain generator 220.
[FIG. 26] FIG. 26 is a view illustrating a strain generator 320 of Embodiment 3.
[FIG. 27] FIG. 27 is a view illustrating a simulation result obtained by calculating a strain distribution when a fastening axial force is applied to the strain generator 320.
[FIG. 28A] FIG. 28A is a view illustrating a strain generator 420 of Embodiment 4.
[FIG. 28B] FIG. 28B is a view illustrating the strain generator 420 of Embodiment 4.
[FIG. 29A] FIG. 29A is a view illustrating the strain generator 420 of a modified example of Embodiment 4.
[FIG. 29B] FIG. 29B is a view illustrating the strain generator 420 of the modified example of Embodiment 4.
[FIG. 30A] FIG. 30A is a perspective view of a detection device 500 of Embodiment 5.
[FIG. 30B] FIG. 30B is a perspective view of the detection device 500 of Embodiment 5.
[FIG. 31A] FIG. 31A is a view illustrating an exploded state of the detection device 500.
[FIG. 31B] FIG. 31B is a view illustrating a strain generator 520 to which an O-ring 560 is attached.
[FIG. 32A] FIG. 32A is a view illustrating a lower casing 510L of a casing 510, and the strain generator 520.
[FIG. 32B] FIG. 32B is a view illustrating the lower casing 510L of the casing 510, and the strain generator 520.
[FIG. 33A] FIG. 33A is a view illustrating a cross section taken along line E-E in FIGS. 30A and 30B.
[FIG. 33B] FIG. 33B is a view illustrating a cross section taken along line E-E in FIGS. 30A and 30B.
[FIG. 34] FIG. 34 is a view illustrating a detection device 500M1 of a first modified example of Embodiment 5.
[FIG. 35A] FIG. 35A is a view illustrating a strain generator 520M2 of a second modified example of Embodiment 5.
[FIG. 35B] FIG. 35B is a view illustrating the strain generator 520M2 of the second modified example of Embodiment 5.
[FIG. 36A] FIG. 36A is a view illustrating a strain generator 520M3 of a third modified example of Embodiment 5.
[FIG. 36B] FIG. 36B is a view illustrating the strain generator 520M3 of the third modified example of Embodiment 5.
[FIG. 37A] FIG. 37A is a view illustrating a strain generator 520M4 of a fourth modified example of Embodiment 5.
[FIG. 37B] FIG. 37B is a view illustrating the strain generator 520M4 of the fourth modified example of Embodiment 5.
[FIG. 38A] FIG. 38A is a view illustrating a strain generator 520M5 of a fifth modified example of Embodiment 5.
[FIG. 38B] FIG. 38B is a view illustrating the strain generator 520M5 of the fifth modified example of Embodiment 5.
[FIG. 38C] FIG. 38C is a view illustrating an exploded view of a detection device 500M5 including the strain generator 520M5 of the fifth modified example of Embodiment 5.
[FIG. 38D] FIG. 38D is a partially enlarged view of the detection device 500M5.
[FIG. 38E] FIG. 38E is a partially enlarged view of the detection device 500M5.
[FIG. 39A] FIG. 39A is a view illustrating a strain generator 520M6 of a sixth modified example of Embodiment 5.
[FIG. 39B] FIG. 39B is a view illustrating the strain generator 520M6 of the sixth modified example of Embodiment 5.

### DETAILED DESCRIPTION OF THE INVENTION

Hereinafter, embodiments in which the detection device of the present disclosure is applied will be described. An XYZ coordinate system is defined for the following description. A direction parallel to an X axis (X direction), a direction parallel to a Y axis (Y direction), and a direction parallel to a Z axis (Z direction) are orthogonal to each other. The plan view refers to a view of an XY plane. In the following, the length, width, thickness, and the like of the components may be exaggerated for ease of understanding of configurations.

### <Embodiment 1>

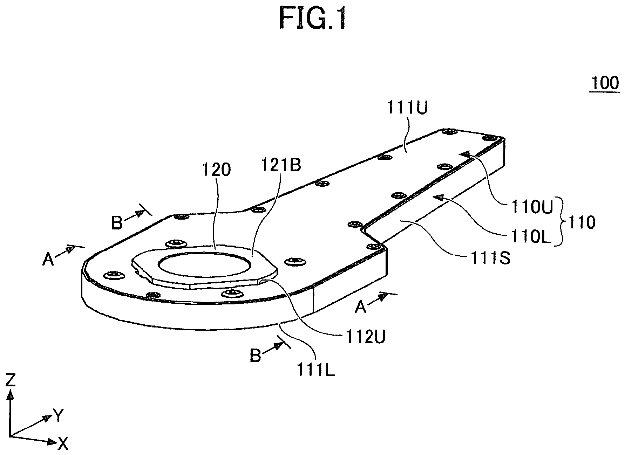

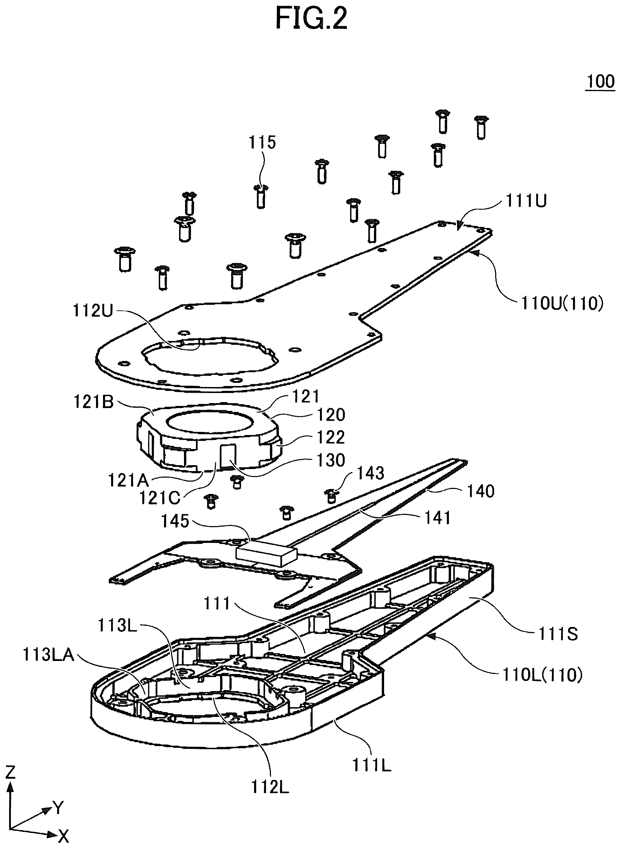

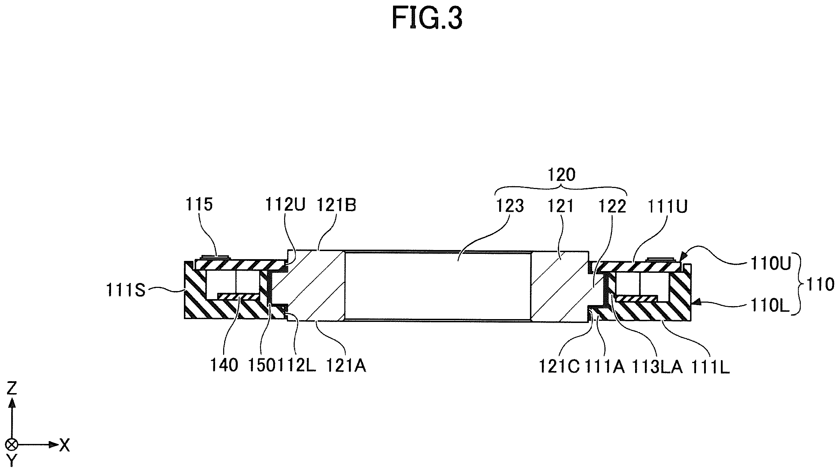

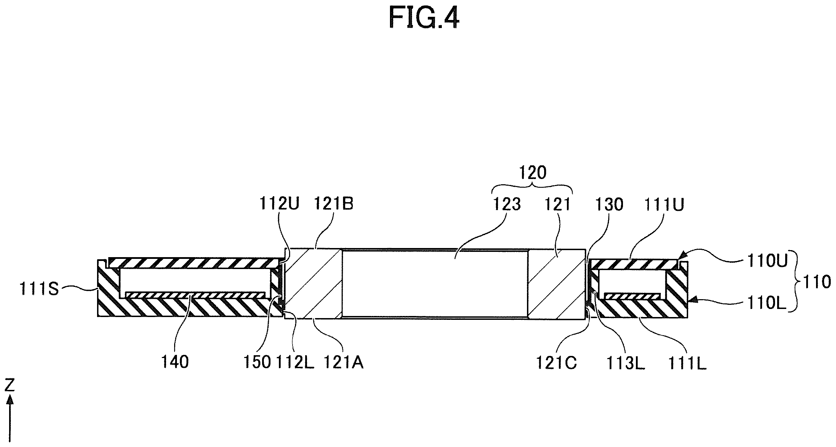

FIG. 1 is a perspective view illustrating a detection device 100 of Embodiment 1. FIG. 2 is a view illustrating an exploded state of the detection device 100. FIG. 3 is a view illustrating a cross section taken along line A-A in FIG. 1. The cross section taken along line A-A is a cross section including the center axis of a through-hole 123 and being in a cross section cut parallel to an XZ plane. FIG. 4 is a view illustrating a cross section taken along line B-B in FIG. 1. The cross section taken along line B-B is a cross section including the center axis of the through-hole 123 and being in a cross section cut parallel to a plane formed by rotating the XZ plane by 45 degrees clockwise as viewed in a +Z direction. Therefore, only the Z axis is illustrated in FIG. 4.

The detection device 100 includes a casing 110, a strain generator 120, a strain sensor 130, a wiring board 140, a communication controller 145, and a sealing resin 150. The casing 110 includes a lower casing 110L and an upper casing 110U. In the detection device 100, the lower side (-Z direction side) is an example of the first side, and the upper side (+Z direction side) is an example of the second side. A direction that connects the first side and the second side is a vertical direction.

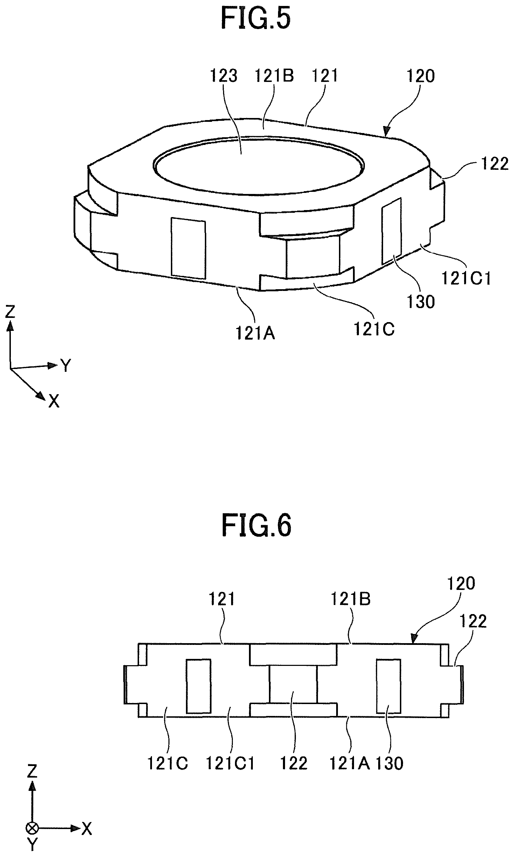

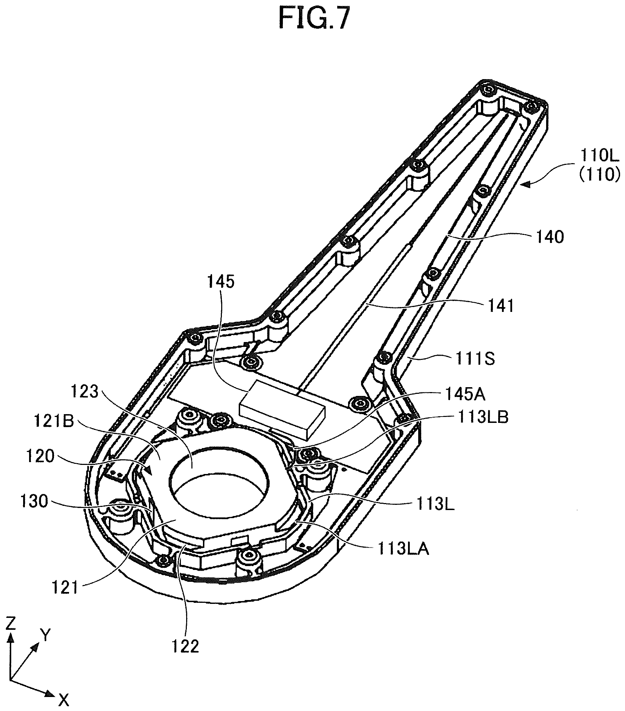

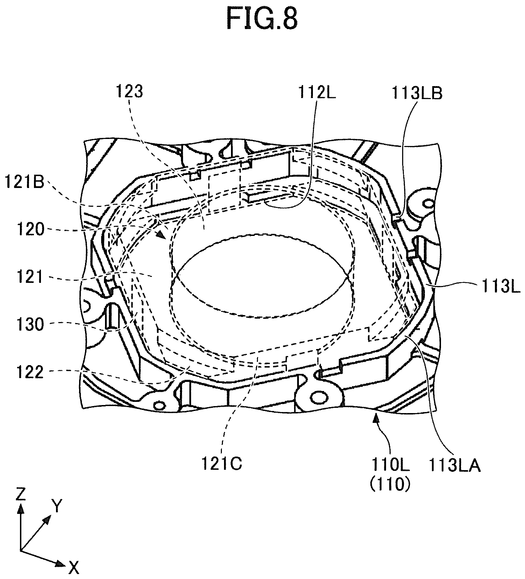

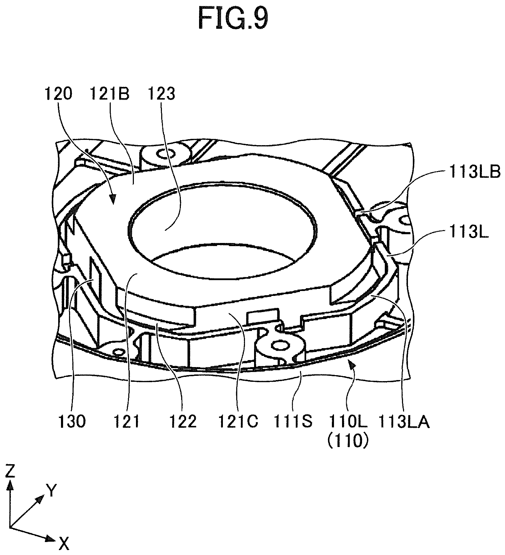

The following description will be made with reference to FIGS. 5 to 9 in addition to FIGS. 1 to 4. FIGS. 5 and 6 are views illustrating the strain generator 120 and the strain sensor 130. FIG. 7 is a view illustrating a state in which the upper casing 110U is removed from the detection device 100 and the sealing resin 150 is omitted. FIGS. 8 and 9 are views illustrating a state in which the strain generator 120 and the strain sensor 130 are disposed in the lower casing 110L. In FIG. 8, the strain generator 120 and the strain sensor 130 are shown with dashed lines.

### <Outline of Detection Device 100>

According to the detection device 100, in a state in which the bolt of the fastening mechanism is inserted into the through-hole 123 of the strain generator 120, the fastening mechanism and a to-be-fastened member contact a lower surface 121A and an upper surface 121B of the strain generator 120 that vertically project from the casing 110. The lower surface 121A and the upper surface 121B are a flat surface. This is for enabling the fastening mechanism and the to-be-fastened member to contact each other stably and reliably.

The usage state of the detection device 100 can be, for example, a case in which the fastening mechanism contacts the lower surface 121A and the to-be-fastened member contacts the upper surface 121B, or a case in which the to-be-fastened member contacts the lower surface 121A and the fastening mechanism contacts the upper surface 121B. The detection device 100 is configured to detect the fastening axial force applied to the bolt when the fastening mechanism fastens the detection device 100 to the to-be-fastened member. The detection device 100 outputs a strain detection signal indicating the fastening axial force to the exterior by wireless communication via the communication controller 145 and an antenna 141.

<Configuration of Components of Detection Device 100>

The casing 110 includes the lower casing 110L and the upper casing 110U. In order for the detection device 100 to perform wireless communication, the casing 110 is formed of a dielectric, such as a resin or the like. The casing 110 is long in the Y direction. The casing 110 houses at least a part of a body 121 of the strain generator 120 along an outer side surface 121C of the body 121. The casing 110 houses at least the part of the body 121 of a strain generator 120 because the lower end and the upper end of the body 121 project from the casing 110.

The lower casing 110L includes a bottom plate 111, a lower surface 111L, a side wall 111s, an opening 112L, and a rib 113L. The lower surface 111L is an example of a first surface, and the bottom plate 111 of the lower casing 110L including the lower surface 111L is an example of a first wall. The opening 112L is an example of a first opening. The rib 113L is an example of the facing wall.

The lower surface 111L is a lower surface of the detection device 100 and is a lower surface of the casing 110. However, the lower surface 121A of the strain generator 120 projects downward of the lower surface 111L. The side wall 111S is provided along the outer periphery of the bottom plate 111, and extends in the +Z direction from the bottom plate 111.

The lower casing 110L includes the opening 112L (see FIGS. 2 to 4 and 8) at the center of a portion of the bottom plate 111 on the -Y direction side, the portion being configured to house the strain generator 120. The opening 112L is an octagonal opening formed by chamfering the four corners of a square to have smooth convex curves in the plan view, and has an opening shape that conforms to the planar shape of the lower end of the body 121 of the strain generator 120.

The opening 112L and the rib 113L form a housing, i.e., a space configured to house the strain generator 120, together with the opening 112U of the upper casing 110U. The space enclosed by the opening 112L communicates (connects) with the space enclosed by the rib 113L, and the space enclosed by the rib 113L communicates (connects) with the space enclosed by the opening 112U.

As illustrated in FIGS. 3, 4, and 8, the lower end of the body 121 of the strain generator 120 is inserted into the opening 112L. The size and shape of the opening 112L are adjusted in the plan view such that substantially no gap is formed with respect to the outer side surface of the lower end of the body 121 in a state in which the lower end of the body 121 of the strain generator 120 is inserted.

As illustrated in FIGS. 7 and 8, the rib 113L is provided along the periphery of the opening 112L, and extends upward from the upper surface of the bottom plate 111. The rib 113L faces the outer side surface 121C of the body 121 of the strain generator 120 in a state in which the strain generator 120 is disposed in the space (housing) enclosed by the rib 113L of the lower casing 110L.

The height of the rib 113L from the bottom plate 111 is equal to the height of the side wall 111S from the bottom plate 111. The rib 113L includes, at four locations on the ±X direction sides and on the ±Y direction sides: recesses 113LA (see FIG. 4 and FIGS. 7 to 9) that are recessed outward in the plan view; and cutout portions 113LB (see FIGS. 7 to 9). The recesses 113LA are a part of the rib 113L, and are recessed outward, in the plan view, of recesses 113LA-free portions of the rib 113L.

The four recesses 113LA house four projections 122 of the strain generator 120. On the lower side of the recesses 113LA, an engagement portion 111A is provided in which the bottom plate 111 extends toward the center of the opening 112L. The engagement portion 111A overlaps with the projections 122 of the strain generator 120 in the plan view, and projects toward the outer side surface of the body 121 of the strain generator 120 beyond the rib 113L. The engagement portion 111A is engaged with the lower ends of the projections 122, thereby preventing the strain generator 120 from being removed. As long as the number of the recesses 113LA is at least one, the recesses 113LA may be provided in accordance with the projections 122.

The cutout portion 113LB is provided in a section between the two recesses 113LA next to each other at the rib 113L. The cutout portion 113LB is a portion cut out from the upper end of the rib 113L for passage of a signal line 145A (see FIG. 7) connecting the communication controller 145 and the four strain sensors 130. Instead of the cutout portion 113LB, a hole (through-hole) for passage of the signal line 145A may be provided.

As illustrated in FIGS. 2 and 7, the lower casing 110L houses the wiring board 140 on the +Y direction side of the portion in which the strain generator 120 is disposed.

As illustrated in FIGS. 1 and 2, the upper casing 110U has the same shape as that of the bottom plate 111 of the lower casing 110L in the plan view, and includes an upper surface 111U and an opening 112U. The upper casing 110U is a flat plate, and is an example of a second wall. The upper surface 111U is an example of a second surface, and the opening 112U is an example of a second opening. The upper surface 111U is the upper surface of the detection device 100 and is the upper surface of the casing 110. However, the upper surface 121B of the strain generator 120 projects upward of the upper surface 111U.

The opening 112U is formed at the same position as that of the opening 112L of the lower casing 110L in the plan view, and has the same shape of the opening. The space enclosed by the opening 112U communicates with the space enclosed by the rib 113L in a state in which the upper casing 110U is attached to the lower casing 110L as illustrated in FIG. 2.

The upper end of the body 121 of the strain generator 120 is inserted into the opening 112U. The size and shape of the opening 112U are adjusted in the plan view such that substantially no gap is formed with respect to the outer side surface of the upper end of the body 121 in a state in which the upper end of the body 121 of the strain generator 120 is inserted.

As illustrated in FIG. 2, the upper casing 110U is fixed to the lower casing 110L as illustrated in FIG. 1, by inserting screws 115 into screw holes and fastening the screws 115 to the screw holes of the lower casing 110L, in a state in which the strain generator 120 and the wiring board 140, on which the communication controller 145 is mounted, are housed in the lower casing 110L. The upper casing 110U is a plate-like upper cover facing the lower casing 110L. In a state in which the strain generator 120 and the wiring board 140, on which the communication controller 145 is mounted, are housed in the lower casing 110L, by closing the upper part of the lower casing 110L by the upper casing 110U, the detection device 100 is completed. Thus, the upper casing 110U is merely the upper cover, and the lower casing 110L can house the strain generator 120 and the wiring board 140 on which the communication controller 145 is mounted, and the engagement portion 111A prevents the strain generator 120 from being removed. Therefore, the detection device 100 is firmly assembled. The upper casing 110U is not limited to a configuration that is a plate-like upper cover, and may have a configuration of including a side wall (a side wall extending downward), such as the side wall 111S of the lower casing 110L.

The strain generator 120 includes the body 121, the four projections 122, and the through-hole 123. The strain generator 120 is preferably formed of a metal material, such as stainless steel or the like.

The body 121 is a portion enclosing the through-hole 123, and includes the lower surface 121A located at the lower end, the upper surface 121B located at the upper end, and the outer side surface 121C. The lower surface 121A is an example of a first end surface, and the upper surface 121B is an example of a second end surface. The lower end of the body 121 on the lower side on which the lower surface 121A exists is an example of the first end, and the upper end of the body 121 on the upper side on which the upper surface 121B exists is an example of the second end. The outer side surface 121C is an example of the first outer side surface. Similar to the openings 112L and 112U in the plan view, the body 121 has an octagonal shape formed by chamfering the four corners of a square to have smooth convex curves in the plan view. The through-hole 123 that is circular is located at the center of the body 121.

As illustrated in FIGS. 3 and 4, the lower end of the body 121 is inserted into the opening 112L of the lower casing 110L, and the lower surface 121A projects downward of the lower surface 111L of the lower casing 110L. As illustrated in FIGS. 3 and 4, the upper end of the body 121 is inserted into the opening 112U of the upper casing 110U, and the upper surface 121B projects upward of the upper surface 111U of the upper casing 110U.

The outer side surface 121C is a side surface on the outer side of the body 121, and faces the rib 113L in a state in which the strain generator 120 is disposed in the space enclosed by the rib 113L of the lower casing 110L. The projections 122 are provided at the four corners on the ±X direction sides and on the ±Y direction sides of the outer side surface 121C.

As illustrated in FIGS. 5 and 6, the outer side surface 121C includes four flat surfaces 121C1 at four projections 122-free portions of the outer side surface 121C. Two of the four flat surfaces 121C1 are parallel to a plane formed by rotating the XZ plane by 45 degrees clockwise as viewed in the +Z direction. The remaining two thereof are parallel to a plane formed by rotating the XZ plane by 45 degrees counterclockwise as viewed in the +Z direction.

The projection 122 projects outward of the outer side surface 121C excluding the flat surface 121C1 in the plan view, and is located above the lower surface 121A and below the upper surface 121B in the vertical direction. Therefore, the outer side surface 121C is located above and below the projection 122, and a step is present between the projection 122 and the lower surface 121A, and a step is present between the projection 122 and the upper surface 121B. As illustrated in FIG. 5, both ends of the projection 122 in the plan view are chamfered.

The projection 122 is housed in the recess 113LA of the lower casing 110L in a state in which the strain generator 120 is disposed in the space enclosed by the rib 113L of the lower casing 110L. Therefore, rotation of the strain generator 120 with respect to the casing 110 can be suppressed. Also, in this state, the lower surface of the projection 122 is engaged with the engagement portion 111A. In this state, the projection 122 overlaps with the engagement portion 111A in the plan view. Therefore, the strain generator 120 can be prevented from falling out from the opening 112L. The number of the projections 122 may be at least one.

The through-hole 123 is formed so as to connect the lower surface 121A and the upper surface 121B at the center of the body 121 in the plan view. The bolt of the fastening mechanism is inserted into the through-hole 123, and thus the through-hole 123 has an opening size that conforms to the plane size of the bolt. The through-hole 123 is a cylindrical hole, and connects the lower surface 121A and the upper surface 121B of the strain generator 120.

The fastening axial force of a direction (Z direction) passing through the through-hole 123 is applied to the lower surface 121A and the upper surface 121B of the strain generator 120 in a state in which the fastening mechanism and the to-be-fastened member are in contact with each other. As a result, the strain generator 120 is compressed in the vertical direction, and the strain generator 120 bends such that the outer side surface 121C expands outward, thereby generating strain.

As illustrated in FIGS. 5 and 6, the strain sensor 130 is provided at four projections 122-free portions of the four flat surfaces 121C1 of the outer side surface 121C of the body 121 of the strain generator 120.

The strain sensor 130 includes one or more strain detection elements, and is configured to detect strain of the strain generator 120. For example, the strain detection elements for use are each a strain-resisting element that changes in resistance value in accordance with the amount of strain. Four strain detection elements may be provided and connected in a bridge.

The strain detection element may be formed on the flat surface 121C1 by printing a composite resistor in which a cermet or binder is a synthetic resin. The strain detection elements can be readily and reliably disposed at predetermined disposition positions on the flat surface 121C1. In particular, because printing, drying, and curing of the strain detection elements can be collectively performed on a plurality of strain generators 120 in a state in which the plurality of strain generators 120 are arranged, the strain detection elements can be readily and reliably disposed on the plurality of strain generators 120.

For example, the strain detection elements may be attached to the flat surface 121C1 together with a rigid substrate or a flexible substrate in a state in which the strain detection elements are mounted on the rigid substrate or the flexible substrate. In this case, because the disposition surface is a flat surface, the strain detection elements can be readily and reliably disposed at predetermined disposition positions on the flat surface 121C1.

The wiring board 140 is, for example, a wiring board of FR-4 (Flame Retardant type 4) standard or the like. The wiring board 140 has a Y shape in the plan view, is housed in the lower casing 110L, and is fixed to the lower casing 110L by screws 143.

An antenna 141 is formed on the upper surface of the wiring board 140. The antenna 141 is, for example, a monopole antenna, and is connected to the communication controller 145 via an interconnect. The antenna 141 is configured to receive radio waves radiated from a reader of the detection device 100, and transmit the radio waves to the communication controller 145. The antenna 141 radiates a strain detection signal output by the communication controller 145.

The communication controller 145 is connected to the four strain sensors 130 and the antenna 141 via interconnects. As illustrated in FIG. 7, the signal line 145A (interconnect) connecting the communication controller 145 and the four strain sensors 130 is passed through the cutout portion 113LB of the rib 113L of the lower casing 110L.

The communication controller 145 includes therein: a controller configured to generate a strain detection signal representing the degree of strain of the strain generator 120 based on the output of the strain sensor 130; and a communicator configured to perform wireless communication using the antenna 141. The communicator provides the controller with the power received by the antenna 141 from the reader of the detection device 100, thereby driving the controller. The controller generates a strain detection signal representing the degree of strain of the strain generator 120, and transmits the strain detection signal to the communicator. The communicator radiates the strain detection signal through the antenna 141. The radiated strain detection signal is received by the reader of the detection device 100.

As illustrated in FIGS. 3 and 4, the sealing resin 150 is an example of a filler to be charged between the rib 113L of the lower casing 110L and the strain generator 120. For example, urethane foam or the like can be used as the sealing resin 150. As an example, urethane foam may be injected between the rib 113L and the strain generator 120. By providing the sealing resin 150, the cutout portion 113LB of the rib 113L is sealed. In addition, it is possible to seal a gap between the lower casing 110L and the upper casing 110U, and a gap between the openings 112L and 112U and the strain generator 120.

By providing the sealing resin 150 as described above, the inner space of the casing 110 can be sealed, and the strain generator 120 can be fixed to the casing 110 more firmly. For example, a spacer formed of sponge or the like may be provided between the strain generator 120 and the casing 110, such as, for example, between the projection 122 and the engagement portion 111A on the lower side of the recess 113LA.

### <Usage State of Detection Device 100>

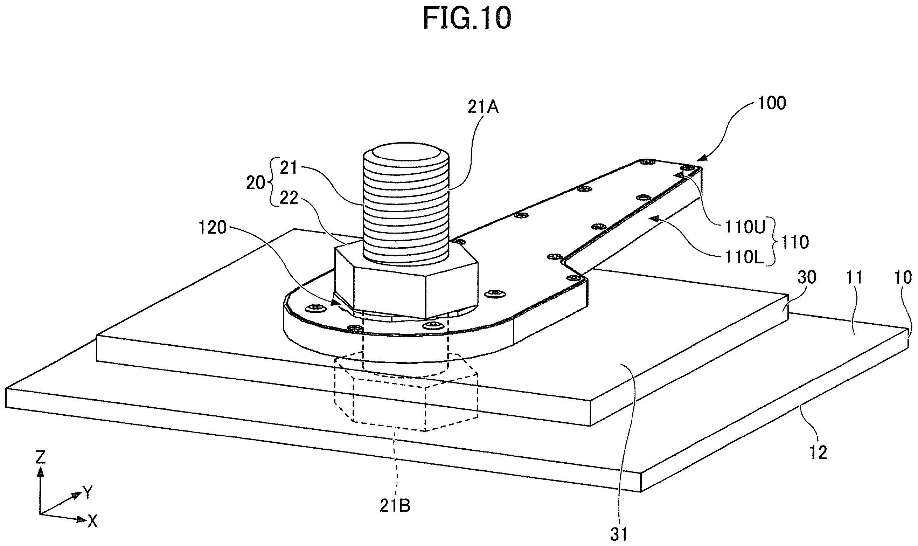

FIG. 10 is a view illustrating an example of a usage state of the detection device 100. FIG. 10 illustrates a fixing portion 10, a fastening mechanism 20, and a to-be-fastened member 30. The fixing portion 10 is a part of a structure, such as a building, a road, a tunnel, a bridge pier, or the like, or is a member fixedly attached to the structure. The plate-like to-be-fastened member 30 is fixed to an attachment surface 11 of the fixing portion 10 through screw fastening between a bolt 21 and a nut 22 of the fastening mechanism 20. The bolt 21 includes a bolt shaft 21A with threads, and a head 21B. The fixing portion 10 and the to-be-fastened member 30 have a through-hole for passage of the bolt shaft 21A.

In the example illustrated in FIG. 10, the detection device 100 is provided between the nut 22 and the to-be-fastened member 30. The bolt shaft 21A, extending upward from a lower surface 12 opposite to the attachment surface 11 of the fixing portion 10, is inserted into the through-hole 123 (see FIG. 1) of the strain generator 120 of the detection device 100 and the to-be-fastened member 30. The head 21B of the bolt 21 is positioned on the lower surface 12 side of the fixing portion 10. The nut 22 is screwed to the bolt shaft 21A from the top end side of the bolt shaft 21A. The head 21B of the bolt 21 may be embedded in the fixing portion 10 and fixed in place.

In the example illustrated in FIG. 10, when the bolt 21 and the nut 22 are fastened, the to-be-fastened member 30 and the detection device 100 are fixed to the fixing portion 10. At this time, the lower surface 121A (see FIGS. 3 and 4) of the body 121 of the strain generator 120 of the detection device 100 contacts an upper surface 31 of the to-be-fastened member 30, and the upper surface 121B (see FIGS. 3 and 4) of the body 121 contacts the lower surface of the nut 22. Therefore, a fastening axial force in the axial direction (Z direction) of the bolt shaft 21A is applied to the strain generator 120. Here, the lower surface 121A of the body 121 of the strain generator 120 projects downward of the lower surface 111L of the lower casing 110L, and the upper surface 121B projects upward of the upper surface 111U of the upper casing 110U. Therefore, only the lower surface 121A of the body 121 of the strain generator 120 contacts the upper surface 31 of the to-be-fastened member 30, and the lower surface 111L of the lower casing 110L does not contact the upper surface 31 of the to-be-fastened member 30. Also, only the upper surface 121B of the body 121 of the strain generator 120 contacts the lower surface of the nut 22, and the upper surface 111U of the upper casing 110U does not contact the lower surface of the nut 22. With this configuration, the strain generator 120 can reliably receive the fastening axial force applied from the nut 22.

As a result, the strain generator 120 generates strain in accordance with a fastening torque of the nut 22. The strain generated in the strain generator 120 is detected by the four strain sensors 130 of the detection device 100. The controller of the communication controller 145 generates a strain detection signal in accordance with the fastening torque of the nut 22 based on the strain detected by each of the four strain sensors 130 (a change in the resistance value of the strain detection element). The communicator of the communication controller 145 radiates a strain detection signal to the exterior of the casing 110 through the antenna 141. The reader of the detection device 100 can determine the fastening state of the nut 22 based on a voltage value expressed by the strain detection signal received from the detection device 100.

The above describes, as an example, an embodiment in which the detection device 100 does not include a battery or a memory and generates power by an electromotive coil or the like from the signal received from the reader, and the communication controller 145 transmits the strain detection signal to the reader by the generated power. However, this is by no means a limitation. The detection device 100 may include a battery, a memory, or both.

### <Effects>

As described above, the strain generator 120 includes the projection 122 that projects outward of the outer side surface 121C of the body 121 excluding the flat surface 121C1 of the body 121 in the plan view. The casing 110 includes the rib 113L facing the outer side surface 121C. The rib 113L is recessed outward in the plan view, and includes the recess 113LA configured to house the projection 122. Therefore, the projection 122 is engaged with the recess 113LA, and rotation of the strain generator 120 with respect to the casing 110 can be suppressed.

Therefore, it is possible to provide the detection device 100 in which rotation of the strain generator 120 is suppressed.

Also, the casing 110 includes: the bottom plate 111 including the lower surface 111L located on the lower side, an opening 112L provided in the bottom plate 111; the upper casing 110U including the upper surface 111U located on the upper side; and the opening 112U provided in the upper casing 110U. The opening 112L, the facing wall 113L, and the opening 112U form the housing configured to house at least the part of the body 131 of the strain generator 120 excluding the lower end and the upper end of the body 131 of the strain generator 120. The lower surface 121A of the lower end of the strain generator 120 is exposed from the opening 112L and projects downward of the lower surface 111L in the extending direction of the through-hole 123. The upper surface 121B of the upper end of the strain generator 120 is exposed from the opening 112U and projects upward of the upper surface 111U in the extending direction of the through-hole 123.

Therefore, only the lower surface 121A of the body 121 of the strain generator 120 contacts the upper surface 31 of the to-be-fastened member 30, and the lower surface 111L of the lower casing 110L does not contact the upper surface 31 of the to-be-fastened member 30. Also, only the upper surface 121B of the body 121 of the strain generator 120 contacts the lower surface of the nut 22, and the upper surface 111U of the upper casing 110U does not contact the lower surface of the nut 22.

Therefore, the strain generator 120 can reliably receive the fastening axial force applied from the nut 22, and it is possible to provide the detection device 100 in which rotation of the strain generator 120 is suppressed.

The lower surface 121A of the lower end of the strain generator 120 and the upper surface 121B of the upper end of the strain generator 120 are a flat surface. Therefore, the strain generator 120 can more reliably receive the fastening axial force applied from the nut 22 at the lower surface 121A and the upper surface 121B that are flat. It is possible to provide the detection device 100 in which rotation of the strain generator 120 is suppressed.

The lower surface 121A of the lower end contacts any one of the nut 22 of the fastening mechanism 20 and the to-be-fastened member 30 fastened by the fastening mechanism 20. The upper surface 121B of the upper end contacts the other of the nut 22 of the fastening mechanism 20 and the to-be-fastened member 30 fastened by the fastening mechanism 20. Therefore, the lower surface 121A and the upper surface 121B contact the nut 22 of the fastening mechanism 20 and the to-be-fastened member 30 fastened by the fastening mechanism 20, thereby enabling receiving of the fastening axial force more reliably.

Also, in the extending direction of the through-hole 123, the projection 122 is located above the lower surface 121A of the lower end and below the upper surface 121B of the upper end. The step is present between the projection 122 and the lower surface 121A, and the step is present between the projection 122 and the upper surface 121B. Therefore, by engaging the projection 122 with the recess 113LA, rotation of the strain generator 120 with respect to the casing 110 can be suppressed. In addition, the lower surface 121A and the upper surface 121B can contact the nut 22 of the fastening mechanism 20 and the to-be-fastened member 30 fastened by the fastening mechanism 20. Thus, it is possible to provide the detection device 100 that successfully achieves both of suppression of rotation of the strain generator 120 and reliable transmission of the fastening axial force.

Also, the casing 110 further includes the engagement portion 111A that overlaps with the projection 122 in the plan view, projects toward the outer side surface beyond the rib 113L, and is engaged with the lower end of the projection 122. Therefore, the strain generator 120 included in the provided detection device 100 can be prevented from falling out from the opening 112L, and the detection device 100 can be firmly assembled.

Also, the casing 110 further includes the cutout portion 113LB or a hole that is provided in a part of the rib 113L and is for passage of the signal line 145A connected to the strain sensor 130. Therefore, it is possible to realize a configuration in which a signal output by the strain sensor 130, attached to the strain generator 120 located outward of the closed space of the casing 110, can be reliably transmitted to the communication controller 145 located in the closed space of the casing 110.

Also, the sealing resin 150 to be charged between the outer side surface 121C of the strain generator 120 and the rib 113L of the casing 110 is further included, thereby sealing the cutout portion 113LB or the hole of the rib 113L, the gap between the lower casing 110L and the upper casing 110U, the gap between the openings 112L and 112U and the strain generator 120, and the like. Therefore, it is possible to maintain, for a long period of time, hermeticity of the casing 110 in which the wiring board 140, the communication controller 145, and the like are housed, and to more firmly fix the strain generator 120 to the casing 110. The provided detection device 100 can stably detect the fastening axial force for a long period of time.

### <Modified Examples of Embodiment 1>

Here, the differences from the detection device 100 of Embodiment 1 will be mainly described. Components similar to those of the detection device 100 of Embodiment 1 are denoted by the same reference signs, and description thereof will be omitted. In the drawings, only some of the reference signs are shown.

### <Detection Device 100A of First Modified Example>

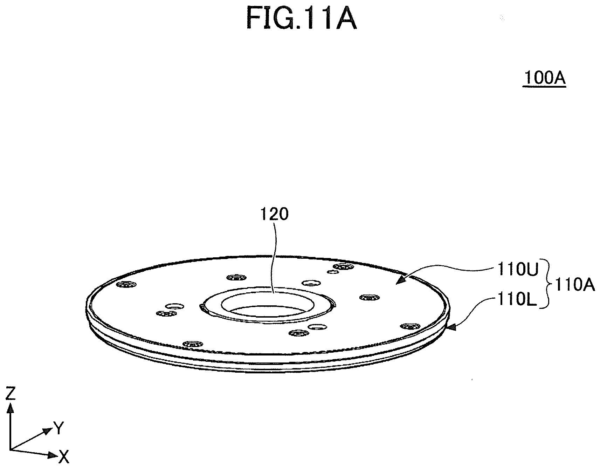

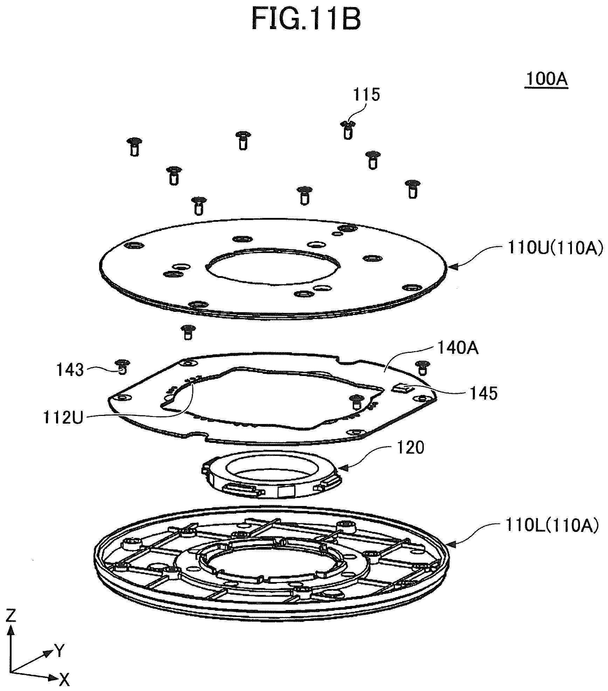

FIG. 11A is a view illustrating a detection device 100A of the first modified example of Embodiment 1. FIG. 11B is a view illustrating an exploded state of the detection device 100A.

The detection device 100A is configured in a disk shape as a whole. The lower casing 110L and the upper casing 110U of the casing 110 are formed by forming the lower casing 110L and the upper casing 110U illustrated in FIG. 2 in a circular shape in the plan view. The wiring board 140A is formed by forming the wiring board 140 illustrated in FIG. 2 in an annular shape. The other configurations are the same as those of the detection device 100 of Embodiment 1.

### <Detection Device 100B of Second Modified Example>

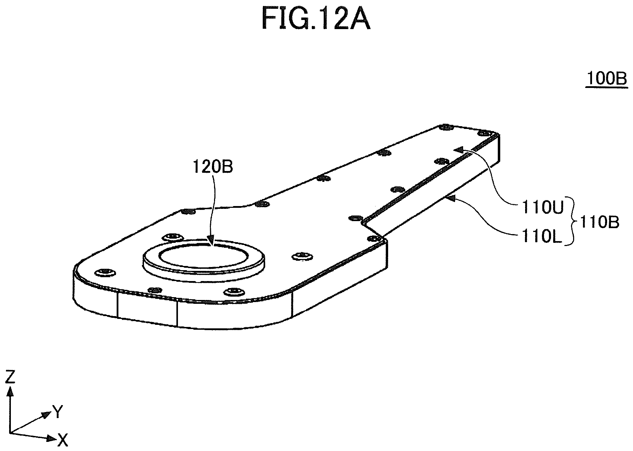

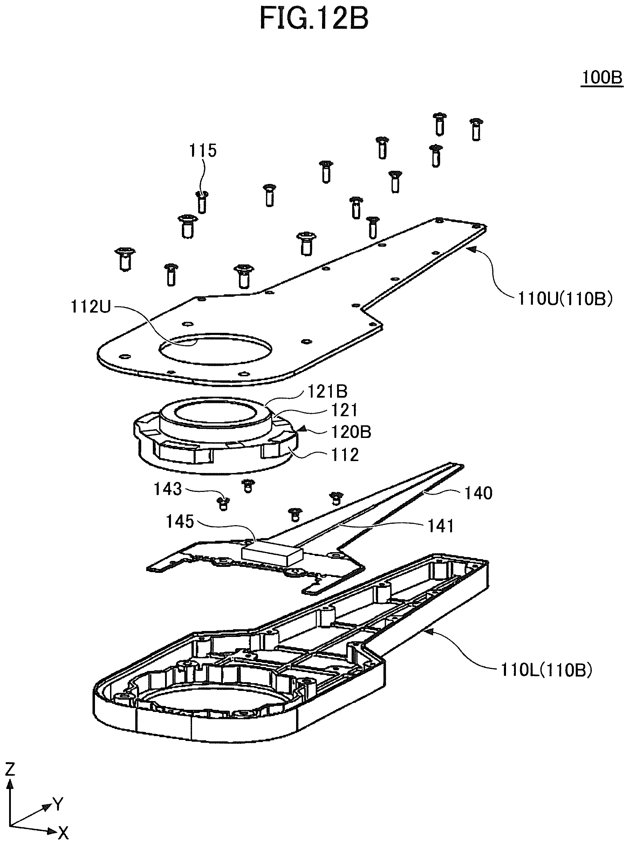

FIG. 12A is a view illustrating a detection device 100B of the first modified example of Embodiment 1. FIG. 12B is a view illustrating an exploded state of the detection device 100B.

The detection device 100B includes, instead of the strain generator 120 of the detection device 100 of Embodiment 1, a strain generator 120B in which the outer diameter of the upper end of the body 121 is reduced. The inner diameter of the upper surface 121B of the body 121 of the strain generator 120 is equal to the inner diameter of the upper surface 121B of the body 121 of the strain generator 120 of the detection device 100 of Embodiment 1. However, the outer diameter thereof is reduced. By such a change, the opening diameter of the opening 112U of the upper casing 110U is reduced.

The strain generator 120 of the detection device 100B has a step between the lower end and the upper end of the body 121 because the outer diameter of the upper end of the body 121 is reduced. The other configurations are the same as those of the detection device 100 of Embodiment 1.

### <Strain Generator 120C of Third Modified Example>

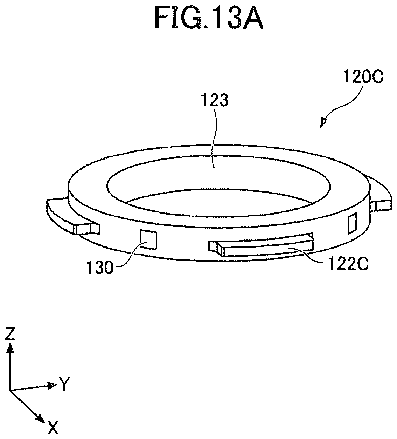

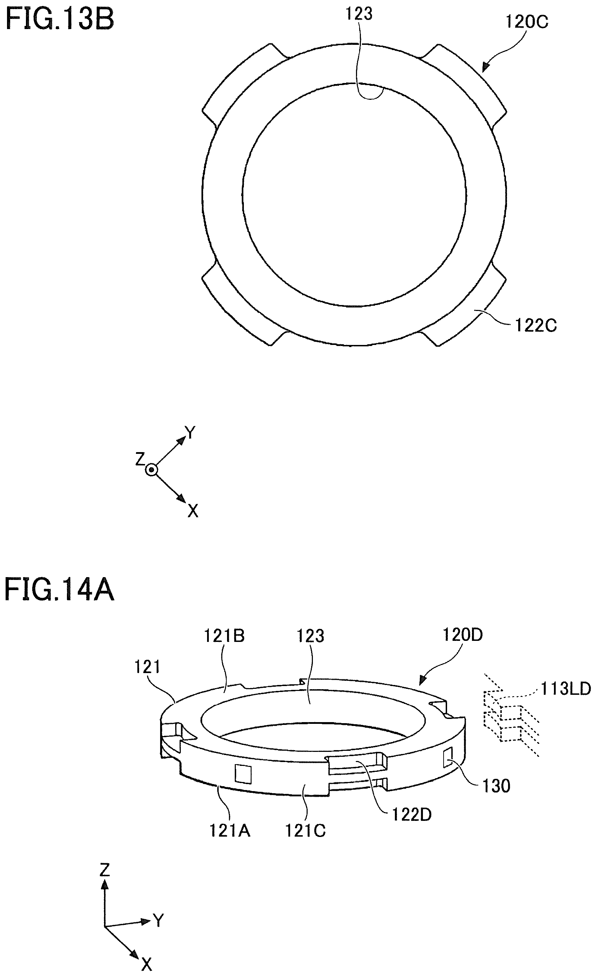

FIGS. 13A and 13B are views illustrating a strain generator 120C of the third modified example. The strain generator 120C is different in that both ends of a projection 122C are not chamfered in the plan view unlike in the projection 122 illustrated in FIG. 5. This strain generator 120C may be used instead of the strain generator 120.

### <Strain Generator 120D of Fourth Modified Example>

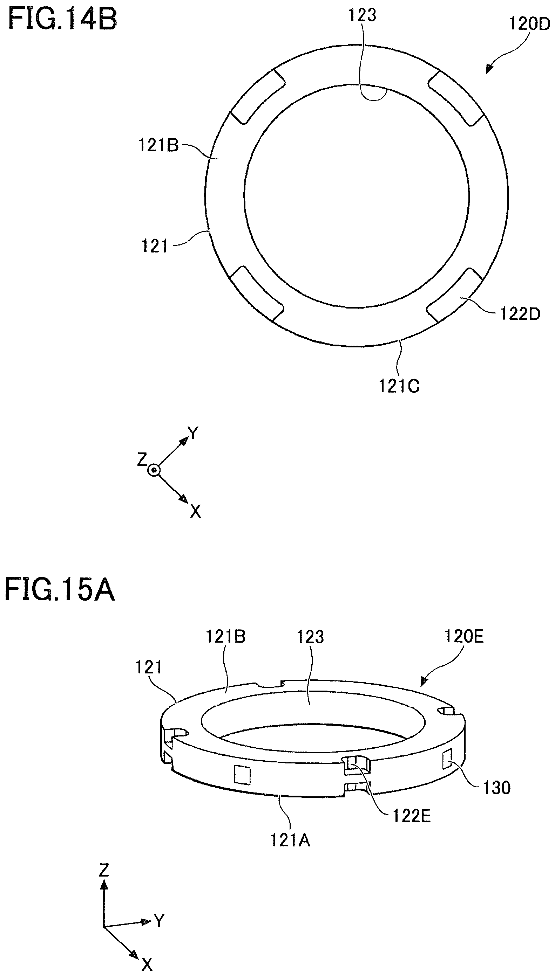

FIGS. 14A and 14B are views illustrating a strain generator 120D of the fourth modified example. The strain generator 120D has a configuration in which the projection 122C of the strain generator 120C illustrated in FIGS. 13A and 13B is changed to a recess 122D.

The body 121 of the strain generator 120D is an annular member, which is provided with the recess 122D at the outer periphery thereof and the through-hole 123 at the center thereof. The recess 122D is provided at four positions at 90-degree intervals in the circumferential direction of the annular strain generator 120, and is provided at two upper and lower positions, i.e., on the lower surface 121A side and on the upper surface 121B side. The recess 122D is recessed radially inward of the outer side surface 121C of the body 121.

When this strain generator 120D is used, the lower casing 110L may include a projection 113LD instead of the recess 113LA (see FIGS. 3, 8 and 9). The projection 113LD is provided in accordance with the upper recess 122D and the lower recess 122D, i.e., two projections 113LD are provided. This strain generator 120D may be used instead of the strain generator 120.

### <Strain Generator 120E of Fifth Modified Example>

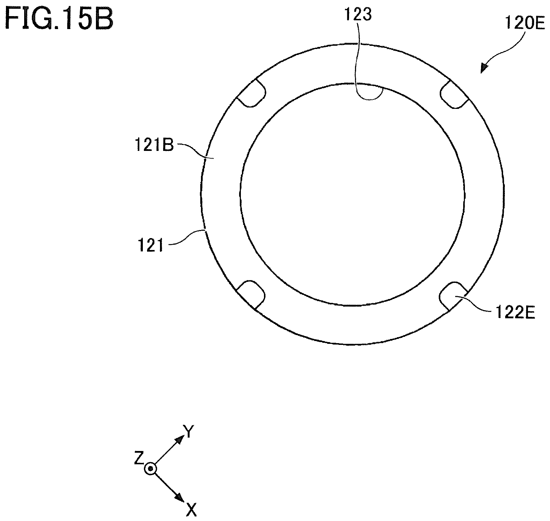

FIGS. 15A and 15B are views illustrating a strain generator 120E of the fifth modified example. The strain generator 120E has a configuration in which the projection 122C of the strain generator 120C illustrated in FIGS. 13A and 13B is changed to a recess 122E.

The recess 122E has a configuration in which the length of the recess 122D illustrated in FIGS. 14A and 14B is shortened in the circumferential direction of the strain generator 120E. This strain generator 120E may be used instead of the strain generator 120.

### <Embodiment 2>

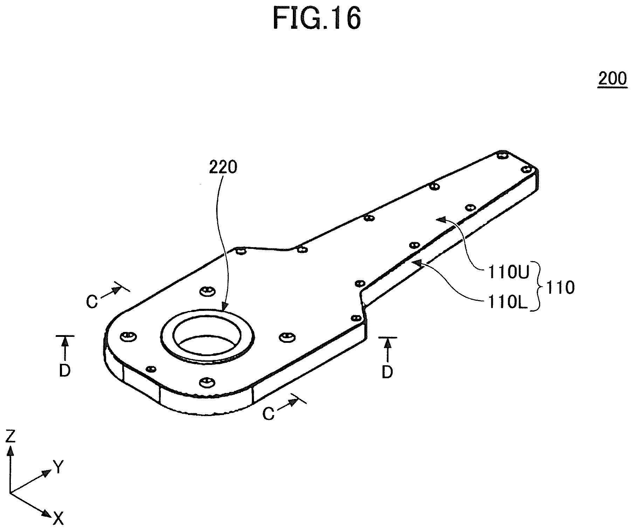

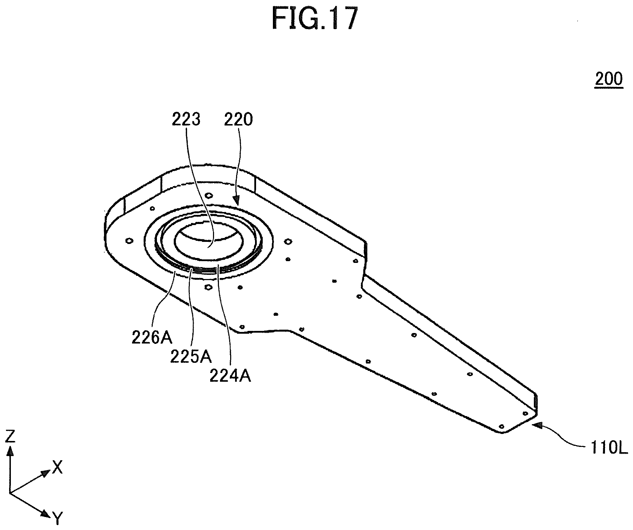

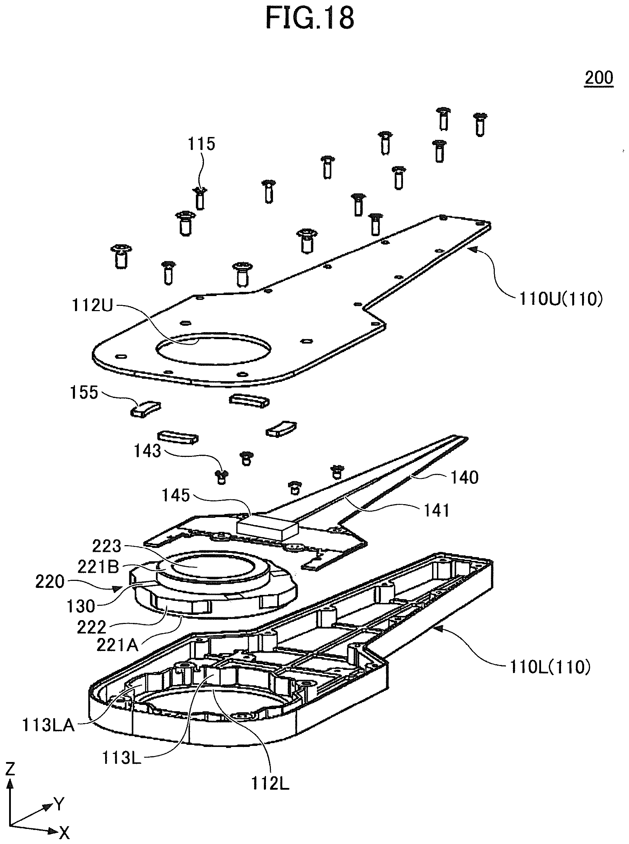

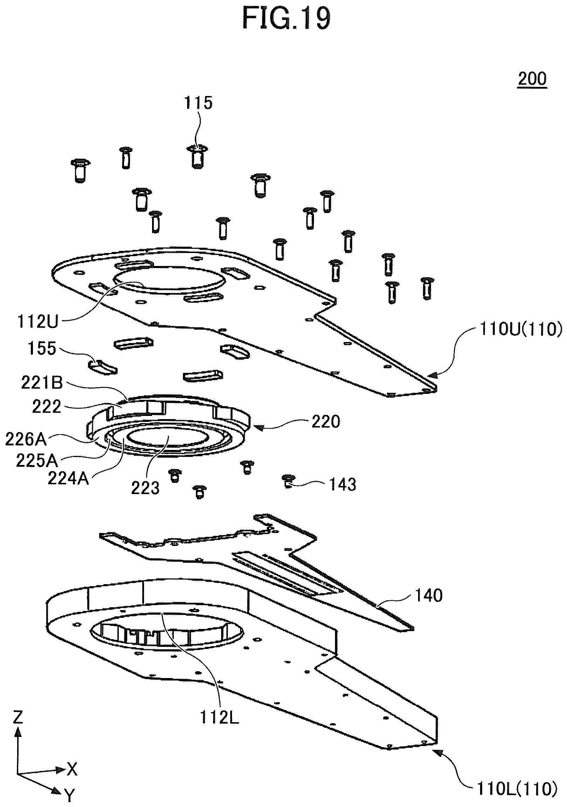

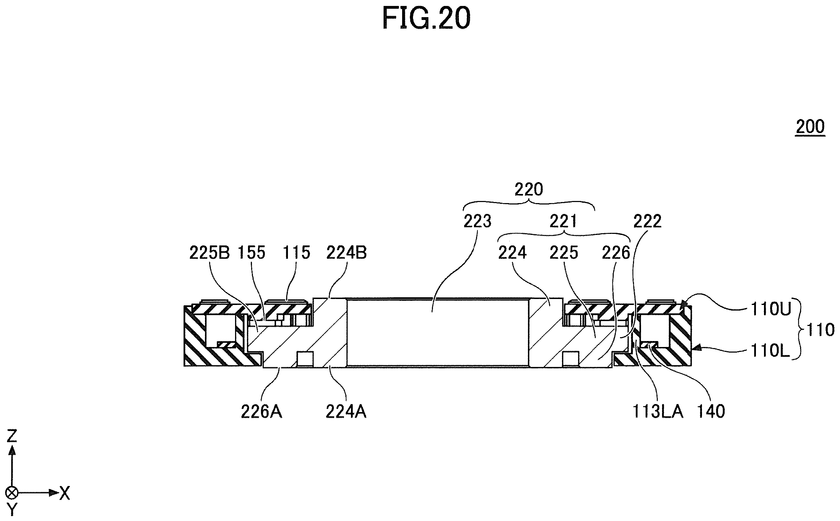

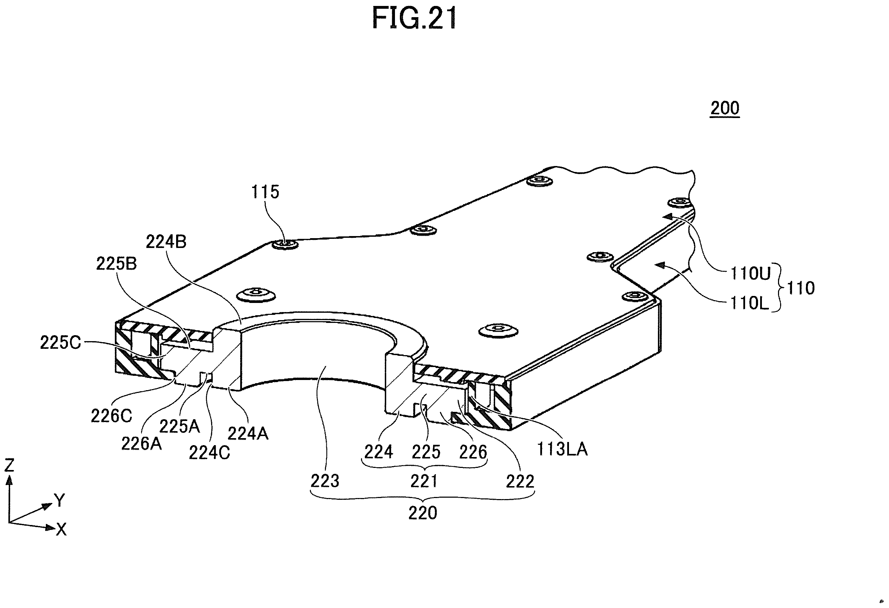

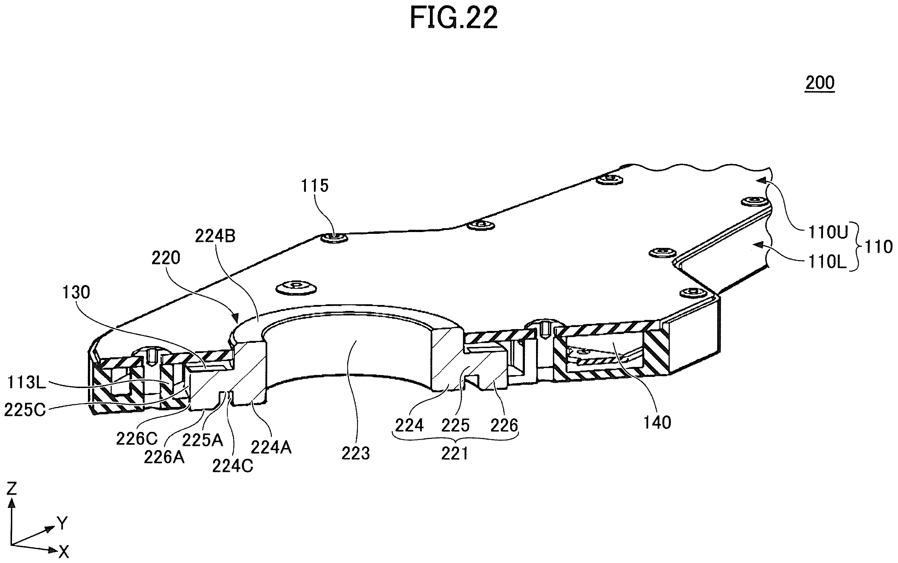

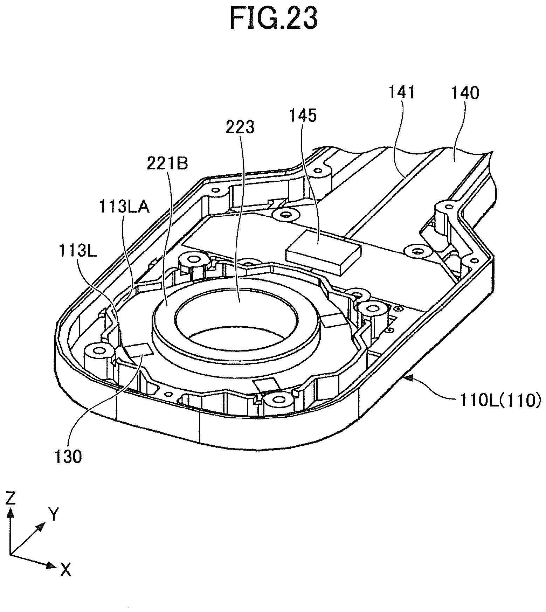

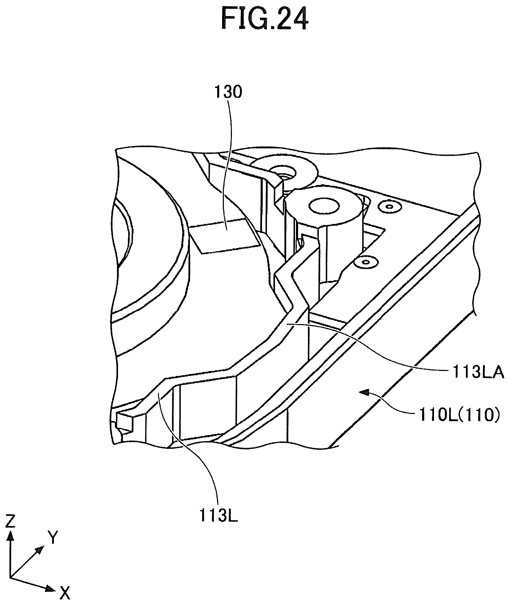

FIGS. 16 and 17 are perspective views illustrating the detection device 200 of Embodiment 2. FIGS. 18 and 19 are views illustrating an exploded state of the detection device 200. FIGS. 16 and 18 illustrate states as viewed from an upper oblique side, and FIGS. 17 and 19 illustrate states as viewed from a lower oblique side. FIGS. 20 and 21 are views illustrating a cross section taken along line C-C in FIG. 16. The cross section taken along line C-C is a cross section including the center axis of a through-hole 223 and being in a cross section cut parallel to an XZ plane. FIG. 22 is a view illustrating a cross section taken along line D-D in FIG. 16. The cross section taken along line D-D is a cross section including the center axis of the through-hole 223 and being in a cross section cut parallel to a plane formed by rotating the XZ plane by 45 degrees clockwise as viewed in the +Z direction. FIG. 23 is a view illustrating a state in which the upper casing 110U is removed from the detection device 200 and the sealing resin 150 is omitted. FIG. 24 is a partially enlarged view of FIG. 23.

Hereinafter, differences from the detection device 100 of Embodiment 1 will be mainly described. Components similar to those of the detection device 100 of Embodiment 1 are denoted by the same reference signs, and description thereof will be omitted.

The detection device 200 includes the casing 110, the strain generator 220, the strain sensor 130, the wiring board 140, the communication controller 145, and a spacer 155. The detection device 200 includes a sealing resin similar to the sealing resin 150 of the detection device 100 of Embodiment 1. However, the sealing resin is omitted here.

### <Configuration of Components of Detection Device 200>

The casing 110 includes the lower casing 110L and the upper casing 110U. In Embodiment 2, the lower portion of the strain generator 220 is larger in the plan view than the lower portion of the strain generator 120 of Embodiment 1. Thus, the rib 113L and the recesses 113LA of the lower casing 110L of Embodiment 2 extend outward of the rib 113L and the recesses 113LA of the lower casing 110L of Embodiment 1 in the plan view. Also, the opening 112L of the lower casing 110L of Embodiment 2 is larger in the plan view than the opening 112L of the lower casing 110L of Embodiment 1.

The strain generator 220 includes a body 221, four projections 222, and the through-hole 223. The strain generator 220 is preferably formed of a metal material, such as stainless steel or the like. A bolt is inserted into the through-hole 223.

The body 221 is a portion enclosing the through-hole 223, and includes a base 224, an extension 225, and an enclosing wall 226. The base 224 is a cylindrical portion enclosing the through-hole 223.

The base 224 includes a lower surface 224A, an upper surface 224B, and an outer side surface 224C. The upper surface 224B is an example of the second end surface. In the usage state illustrated in FIG. 10, the upper surface 224B contacts the lower surface of the nut 22. The lower end at which the lower surface 224A of the base 224 is present is an example of a third end, and the lower surface 224A is an example of a third end surface. The upper end at which the upper surface 224B is present is an example of the second end. The outer side surface 224C is an example of a second outer side surface.

The extension 225 is an annular portion that extends outward in the plan view from the outer side portion of the base 224, and encloses the circumference of the base 224. As is seen from comparison between FIG. 21 and FIG. 22, the four projections 222 project outward of an outer side surface 225C of the extension 225. The outer side surface 225C of the extension 225 is an example of the first outer side surface. As illustrated in FIG. 22, the outer side surface 225C faces the rib 113L of the lower casing 110L.

The cylindrical enclosing wall 226 is provided on the lower side of the extension 225. As illustrated in FIG. 22, the position of the outer side surface 225C of the extension 225 is equal to the position of an outer side surface 226C of the enclosing wall 226 in the radial direction of the through-hole 223. The outer side surface 225C and the outer side surface 226C form an imaginary cylindrical outer peripheral surface enclosed by the outer side surfaces 225C and 226C of the extension 225 and the enclosing wall 226.

A groove 225A is formed, on the lower surface side of the extension 225, between the lower end of the base 224 and the lower end of the enclosing wall 226. As illustrated in FIG. 23, the four strain sensors 130 are disposed at an upper surface 225B of the extension 225 (see FIGS. 20 and 21). The four spacers 155 (see FIGS. 18, 19, and 20) are held between the upper surface 225B (see FIGS. 20 and 21) and the upper casing 110U. The spacer 155 is a urethane sponge or the like. On the upper surface 225B of the extension 225, the four strain sensors 130 and the four spacers 155 are alternately disposed around the through-hole 223.

The enclosing wall 226 is a cylindrical portion that projects from the lower portion of the extension 225 downward in the extending direction (Z direction) of the through-hole 223, and encloses the outer side surface 224C with a gap from the outer side surface 224C of the base 224. With this configuration, the groove 225A is formed between the lower end of the base 224 and the lower end of the enclosing wall 226.

The enclosing wall 226 includes a lower surface 226A and an outer side surface 226C. The lower surface 226A is an example of the first end surface, and projects downward of the lower surface 224A of the base 224. The lower surface 226A corresponds to the lower surface 121A of the strain generator 120 in the detection device 100 of Embodiment 1. In the usage state, the lower surface 226A contacts the upper surface 31 of the to-be-fastened member 30 illustrated in FIG. 10. The lower surface 224A of the base 224 is positioned above the lower surface 226A of the enclosing wall 226, and thus does not contact the upper surface 31 of the to-be-fastened member 30 illustrated in FIG. 10 in the usage state.

In the strain generator 220 as described above, the cross section perpendicular to the radial direction of the through-hole 223 of the body 221 including the base 224, the extension 225, and the enclosing wall 226 is an h shape as illustrated in FIGS. 21 and 22. When the detection device 200 is used instead of the detection device 100 illustrated in FIG. 10, the upper surface 224B contacts the lower surface of the nut 22 and the lower surface 226A contacts the upper surface 31 of the to-be-fastened member 30 in the usage state. The lower surface 224A of the base 224 does not contact the upper surface 31 of the to-be-fastened member 30.

Therefore, in the usage state, when the fastening axial force of the nut 22 is applied, a force is applied between the upper surface 224B and the lower surface 226A of the strain generator 220. The enclosing wall 226 is located on the lower side of the extension 225 extending radially outward from the outer periphery of the base 224, and thus the h-shaped cross-sectional structure of the strain generator 220 functions as a spring. In FIGS. 21 and 22, when the fastening axial force of the nut 22 is applied to the upper surface 224B in the Z direction, the extension 225 bends with respect to the XY plane, thereby generating strain in the strain generator 220.

In Embodiment 2, the strain sensor 130 is disposed at the upper surface 225B of the extension 225. Thus, when the fastening axial force of the nut 22 is applied, the extension 225 bends, thereby generating strain in the strain generator 220. The generated strain is detected by the four strain sensors 130.

### <Simulation Result>

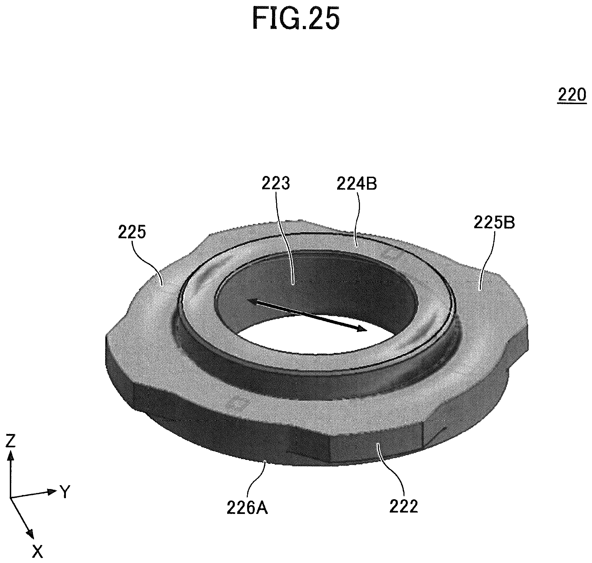

FIG. 25 is a view illustrating a simulation result obtained by calculating a strain distribution when the fastening axial force is applied to the strain generator 220. The shades of gray scale in FIG. 25 represent the amount (degree) of strain generated on the surface of the strain generator 220 in a direction having an angle of 45 degrees with respect to the X axis and the Y axis in the plan view (a direction indicated by a double-sided arrow in FIG. 25). Although only some of the reference numerals are shown in FIG. 25, it is evident that strain is generated on the upper surface 225B of the extension 225. Therefore, the strain generated in the strain generator 220 can be detected by the strain sensor 130 disposed on the upper surface 225B of the extension 225.

As described above, the body 221 of the strain generator 220 includes: the base 224 enclosing the through-hole 123; the extension 225 extending outward in the plan view from the side portion of the base 224; and the enclosing wall 226 that projects from the lower portion of the extension 225 downward in the extending direction of the through-hole 223 and encloses the outer side surface 224C with a gap from the outer side surface 224C of the base 224. The lower surface 226A of the enclosing wall 226 projects downward of the lower surface 224A of the base 224 in the extending direction of the through-hole 223. Therefore, when the fastening axial force of the nut 22 is applied to the upper surface 224B, the extension 225 bends with respect to the XY plane, thereby generating strain in the strain generator 220.

The strain generator 220 includes a projection 222 projecting outward of the outer side surface 225C of the body 221 in the plan view. The casing 110 includes the rib 113L facing the outer side surface 225C. The rib 113L includes the recess 113LA that is recessed outward in the plan view and houses the projection 222. Therefore, the projection 222 is engaged with the recess 113LA, and rotation of the strain generator 220 with respect to the casing 110 can be suppressed.

Therefore, it is possible to provide the detection device 200 in which rotation of the strain generator 220 is suppressed.

### <Embodiment 3>

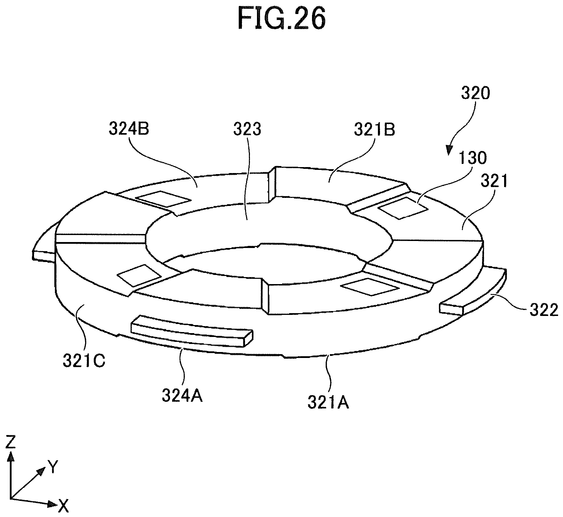

FIG. 26 is a view illustrating the strain generator 320 of Embodiment 3. FIG. 26 also illustrates the strain sensor 130. As an example, the strain generator 320 can be used in the detection device 100 instead of the strain generator 120 of Embodiment 1.

The strain generator 320 includes a body 321, four projections 322, and a through-hole 323. The strain generator 320 is preferably formed of a metal material, such as stainless steel or the like. The strain generator 320 is different from the strain generator 120 of Embodiment 1 in terms of how strain is generated by the fastening axial force. A bolt is inserted into the through-hole 323.

The body 321 is an annular member enclosing the through-hole 323, and includes a lower surface 321A and an upper surface 321B. The lower surface 321A is an example of the first end surface, and the upper surface 321B is an example of the second end surface. In the usage state illustrated in FIG. 10, the lower surface 321A contacts the upper surface 31 of the to-be-fastened member 30, and the upper surface 321B contacts the lower surface of the nut 22.

The body 321 includes: a plurality of first recesses 324A that are recessed upward of the lower surface 321A in the extending direction of the through-hole 323; and a plurality of second recesses 324B that are recessed downward of the upper surface 121B in the extending direction of the through-hole 323. In FIG. 26, as an example, the body 321 includes the four first recesses 324A and the four second recesses 324B. The four first recesses 324A and the four second recesses 324B are disposed so as to have overlapping sections in the circumferential direction of the body 321 enclosing the through-hole 323. This is for facilitating generation of strain in the body 321 in the circumferential direction.

When the first recess 324A and the second recess 324B do not have any overlapping section in the circumferential direction of the body 321, rigidity of the body 321 at the boundary between the first recess 324A and the second recess 324B in the circumferential direction is increased, and strain is less likely to be generated upon application of a fastening axial force. When sufficient strain is generated in the body 321 even if the first recess 324A and the second recess 324B do not have any overlapping section in the circumferential direction of the body 321, the first recess 324A and the second recess 324B need not have any overlapping section.

In the usage state illustrated in FIG. 10, the lower surface 321A contacts the upper surface 31 of the to-be-fastened member 30, but the four first recesses 324A do not contact the upper surface 31 of the to-be-fastened member 30. Similarly, the upper surface 321B contacts the lower surface of the nut 22, but the four second recesses 324B do not contact the lower surface of the nut 22.

Therefore, in the usage state, when the fastening axial force of the nut 22 is applied, a force is applied between the lower surface 321A and the upper surface 321B of the strain generator 320. As a result, the section in which the first recess 324A exists and the section in which the second recess 324B exists bend in the circumferential direction of the body 321, thereby generating strain in the strain generator 320.

The four strain sensors 130 are disposed at the surfaces of the four second recesses 324B. Thus, when the fastening axial force of the nut 22 is applied, strain caused by bending of the strain generator 320 is detected by the four strain sensors 130.

### <Simulation Result>

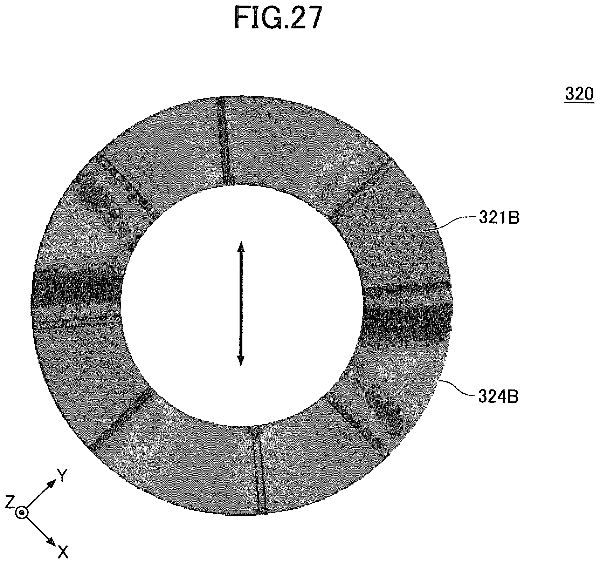

FIG. 27 is a view illustrating a simulation result obtained by calculating a strain distribution when the fastening axial force is applied to the strain generator 320. FIG. 27 illustrates a distribution of strain on the upper surface side of the strain generator 320. The shades of gray scale in FIG. 27 represent the amount (degree) of strain generated on the surface of the strain generator 220 in a direction having an angle of 45 degrees with respect to the X axis and the Y axis in the plan view (a direction indicated by a double-sided arrow in FIG. 27). Although only some of the reference numerals are shown in FIG. 27, it is understandable that the strain in the four second recesses 324B is large. The strain generator 320 is symmetrical between on the lower surface 321A side and on the upper surface 321B side. Thus, the strain of the four first recesses 324A is large similarly. Therefore, the strain generated in the strain generator 320 can be detected by the four strain sensors 130 disposed on the surfaces of the four second recesses 324B.

As described above, the body 321 of the strain generator 320 includes: the plurality of first recesses 324A that are provided at the lower end along the periphery of the through-hole 323 and are recessed upward of the lower surface 321A in the extending direction of the through-hole 323; and the plurality of second recesses 324B that are provided at the upper end along the periphery of the through-hole 323 and are recessed downward of the upper surface 321B in the extending direction of the through-hole 323. The plurality of first recesses 324A and the plurality of second recesses 324B are alternately disposed along the periphery of the through-hole 323.

Therefore, in the usage state, a force is applied between the lower surface 321A and the upper surface 321B of the strain generator 320, thereby generating strain in the strain generator 320.

The strain generator 320 includes the projection 322 projecting outward of the outer side surface 321C (an example of the first outer side surface) of the body 321 in the plan view. The projection 322 is engaged with the recess 113LA of the casing 110. Thus, rotation of the strain generator 320 with respect to the casing 110 can be suppressed.

Therefore, it is possible to provide the detection device of Embodiment 3 in which rotation of the strain generator 320 is suppressed.

Also, the plurality of first recesses 324A and the plurality of second recesses 324B are disposed so as to have overlapping sections in the circumferential direction of the body 321 enclosing the through-hole 323. Thus, the strain generator 320 is readily bent in the circumferential direction, and the fastening axial force can be more reliably detected by the strain sensor 130.

### <Embodiment 4>

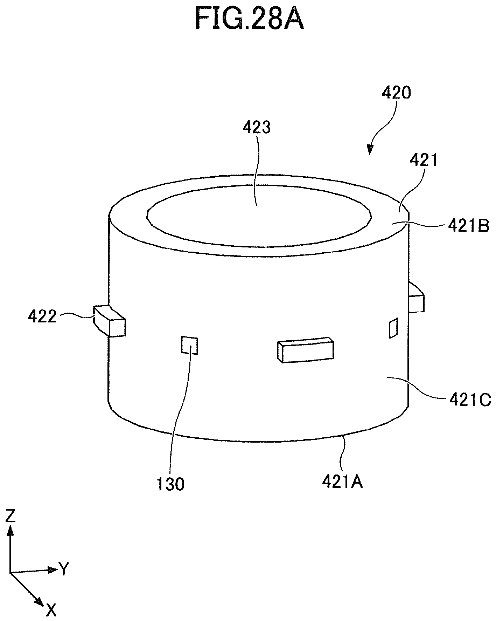

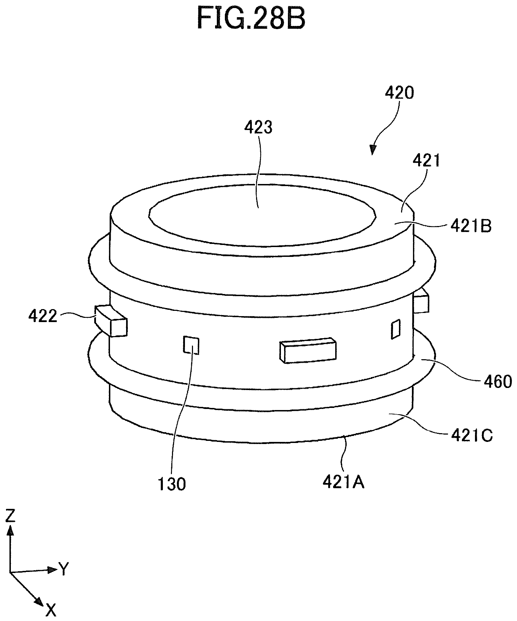

FIGS. 28A and 28B are views illustrating the strain generator 420 of Embodiment 4. FIGS. 28A and 28B also illustrate the strain sensor 130. As an example, the strain generator 420 can be used in the detection device 100 instead of the strain generator 120 of Embodiment 1. FIG. 28B illustrates a state in which an O-ring 460 is attached to the strain generator 420.

The strain generator 420 includes a body 421, four projections 422, and a through-hole 423. The strain generator 420 is preferably formed of a metal material, such as stainless steel or the like. A bolt is inserted into the through-hole 423.

The body 421 is an annular member enclosing the through-hole 423, and includes a lower surface 421A and an upper surface 421B. The lower surface 421A is an example of the first end surface, and the upper surface 421B is an example of the second end surface. In the usage state illustrated in FIG. 10, the lower surface 421A contacts the upper surface 31 of the to-be-fastened member 30, and the upper surface 421B contacts the lower surface of the nut 22. The strain sensor 130 is attached to an outer side surface 421C of the body 421.

As illustrated in FIG. 28B, the two O-rings 460 are attached vertically to the outer side surface 421C of the body 421. The lower O-ring 460 is an example of a first O-ring, and the upper O-ring 460 is an example of a second O-ring. The lower O-ring 460 is attached to the outer side surface 421C so as to be positioned below the strain sensor 130, and the upper O-ring 460 is attached to the outer side surface 421C so as to be positioned above the strain sensor 130. The two O-rings 460 are the same O-rings, and the inner diameters thereof are slightly smaller than the outer circumference of the body 421. Therefore, the O-rings 460 firmly adhere to the outer side surface 421C of the body 421 in a state of being slightly stretched in the circumferential direction.

A casing (not illustrated) configured to house the strain generator 420 may include at least a cylindrical housing corresponding to the outer side surface 421C, and recesses configured to house the four projections 422. The strain generator 420 is attached in a state in which the O-ring 460 is held between the strain generator 420 and the inner side surface of the housing of the casing. That is, the O-ring 460 is compressed in the radial direction. Therefore, the strain sensor 130 is positioned in the space between the two upper and lower O-rings 460. As a result, the inner space of the casing can be sealed, and the strain generator 420 can be fixed to the casing more firmly. Also, the strain sensor 130 is positioned in the space enclosed by the two upper and lower O-rings 460 and the casing, a highly waterproof structure can be obtained.

In the usage state, the lower surface 421A contacts the upper surface 31 (see FIG. 10) of the to-be-fastened member 30, and upon application of the fastening axial force of the nut 22, a force is applied between the lower surface 421A and the upper surface 421B of the strain generator 420, thereby generating strain in the strain generator 420 in the circumferential direction of the body 421. The strain of the strain generator 420 is detected by the four strain sensors 130.

The strain generator 420 includes the projection 422 projecting outward of the outer side surface 421C of the body 421 in the plan view. The projection 422 is engaged with a recess, such as the recess 113LA of the casing 110, rotation of the strain generator 420 with respect to the casing can be suppressed.

Therefore, it is possible to provide the detection device of Embodiment 4 in which rotation of the strain generator 420 is suppressed.

Also, the strain sensor 130 is positioned in the space enclosed by the two upper and lower O-rings 460 and the casing, a highly waterproof structure can be obtained. As a result, a detection device that is highly reliable for a long period of time can be provided.

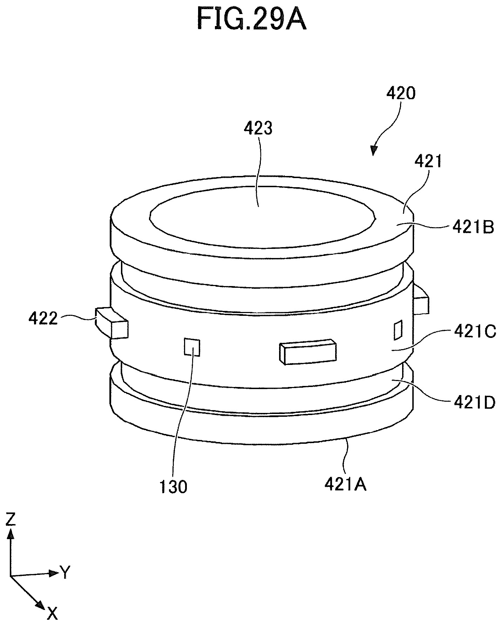

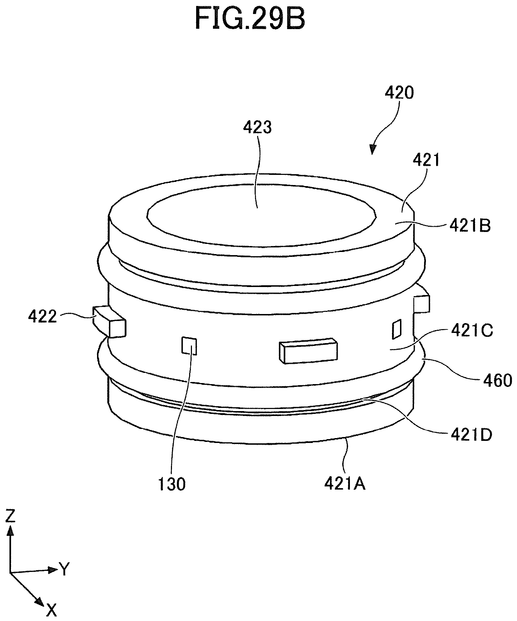

As illustrated in FIGS. 29A and 29B, the strain generator 420 may have a configuration in which a recess 421D is provided in the circumferential direction of the outer side surface 421C at an O-ring 460-attached position of the outer side surface 421C. In accordance with the shape of the O-ring 460, the recess 421D is provided over the entire circumferences above and below the outer side surface 421C.

When this recess 421D is formed, displacement of the O-ring 460 can be suppressed, rotation of the strain generator 420 can be suppressed, and a more reliable detection device can be provided.

### <Embodiment 5>

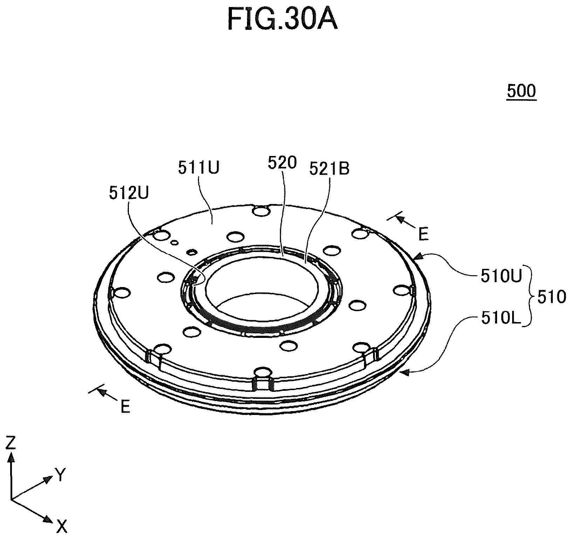

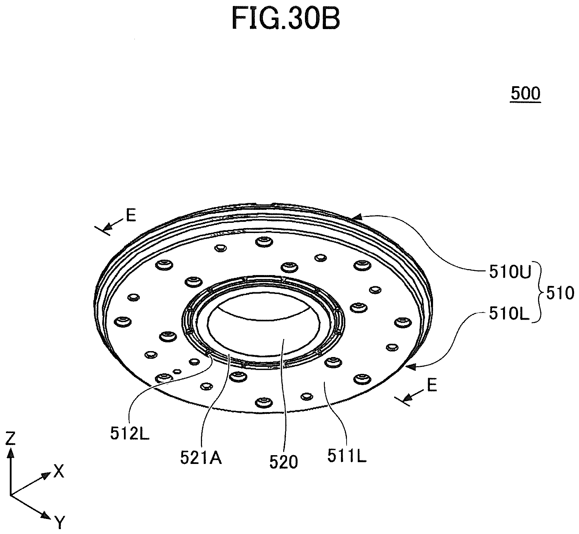

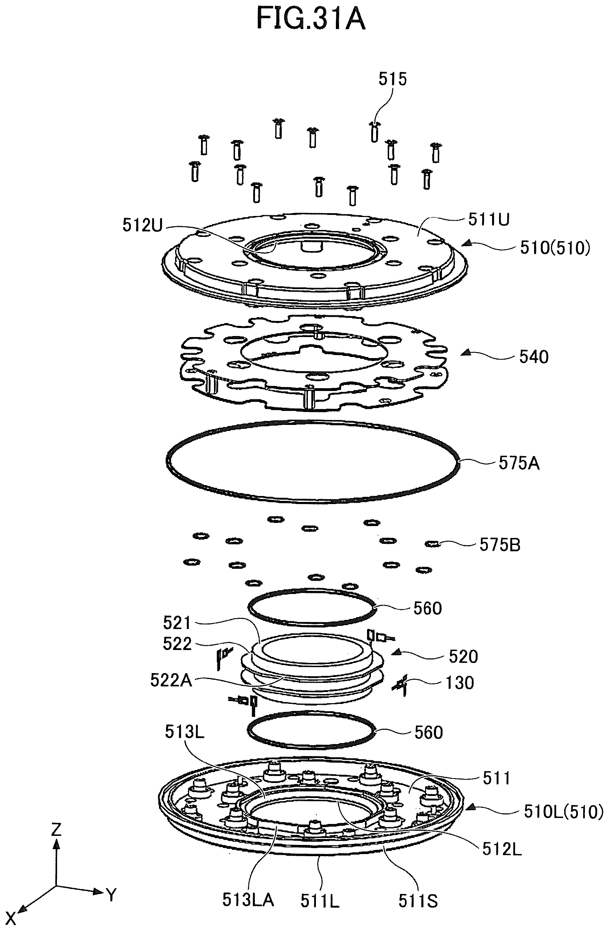

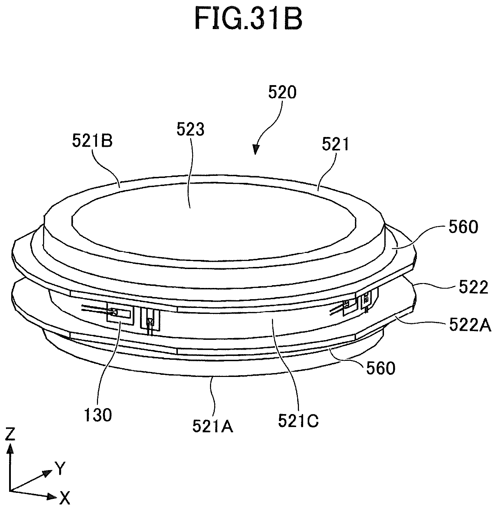

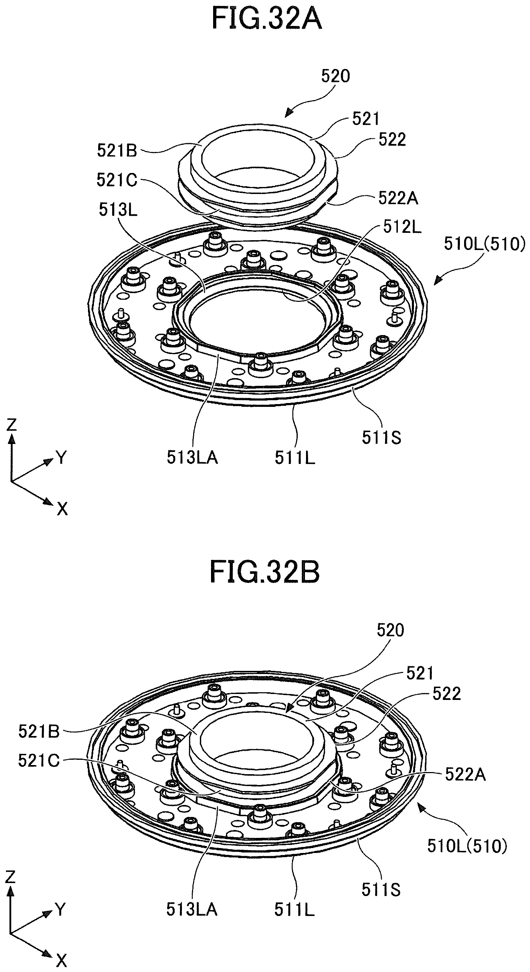

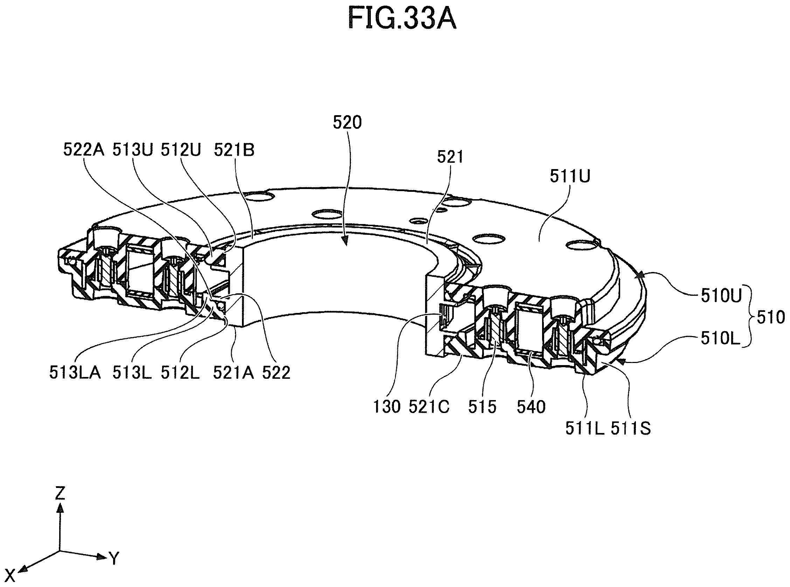

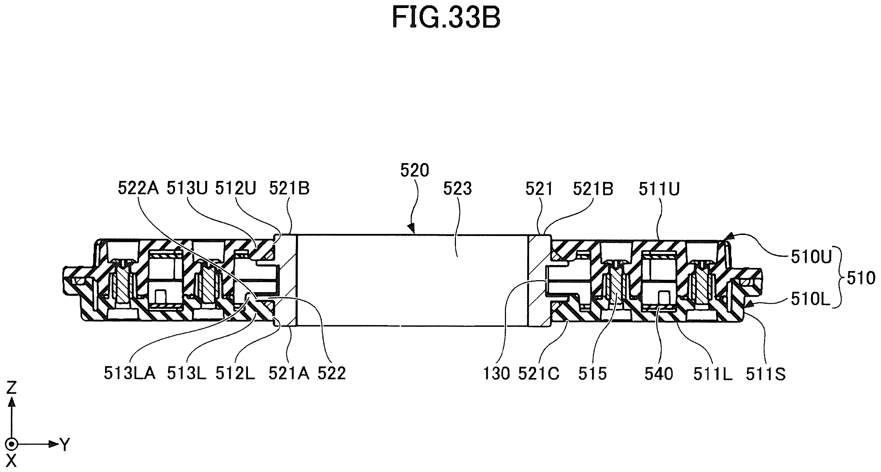

FIGS. 30A and 30B are perspective views of a detection device 500 of Embodiment 5. FIG. 31A is a view illustrating an exploded state of the detection device 500. FIG. 31B is a view illustrating the strain generator 520 to which the O-ring 560 is attached. FIGS. 32A and 32B are views illustrating the lower casing 510L of the casing 510, and the strain generator 520. FIGS. 33A and 33B are views illustrating a cross section taken along line E-E in FIGS. 30A and 30B. The cross section taken along line E-E is a cross section including the center axis of the through-hole 523 and being in a cross section cut parallel to the XZ plane.

The detection device 500 includes a casing 510, a strain generator 520, the strain sensor 130, a wiring board 540, and an O-ring 560. The strain sensor 130 is the same as the strain sensor 130 of Embodiment 1. The detection device 500 includes an antenna and a communication controller on the wiring board 540 that are similar to the antenna 141 and the communication controller 145. However, the antenna and the communication controller are omitted here.

The casing 510 includes the lower casing 510L and an upper casing 510U. In the detection device 500, the lower side (-Z direction side) is an example of the first side, and the upper side (+Z direction side) is an example of the second side. A direction that connects the first side and the second side is a vertical direction.

### <Outline of Detection Device 500>

According to the detection device 500, in a state in which the bolt of the fastening mechanism is inserted into the through-hole 523 of the strain generator 520, the fastening mechanism and the to-be-fastened member contact a lower surface 521A and an upper surface 521B of the strain generator 520 that vertically project from the casing 510. The lower surface 521A and the upper surface 521B are a flat surface. This is for enabling the fastening mechanism and the to-be-fastened member to contact each other stably and reliably.

The usage state of the detection device 500 may be, for example, a case in which the fastening mechanism contacts the lower surface 521A and the to-be-fastened member contacts the upper surface 521B, or a case in which the to-be-fastened member contacts the lower surface 521A and the fastening mechanism contacts the upper surface 521B. The detection device 500 is configured to detect the fastening axial force applied to the bolt when the fastening mechanism fastens the detection device 500 to the to-be-fastened member. The detection device 500 outputs a strain detection signal indicating the fastening axial force to the exterior by wireless communication via the communication controller and the antenna. The fastening axial force is a force in accordance with strain detected by the strain sensor 130. Therefore, the data representing the fastening axial force is data corresponding to the strain detected by the strain sensor 130. The detection device 500 radiates a signal including data corresponding to the strain detected by the strain sensor 130 from the communication controller to the exterior of the detection device 500 via the antenna.

### <Configuration of Components of Detection Device 500>

The casing 510 includes the lower casing 510L and the upper casing 510U. In order for the detection device 500 to perform wireless communication, the casing 510 is formed of a dielectric, such as a resin or the like. The casing 510 has an annular shape. The casing 510 houses at least a part of a body 521 of the strain generator 520 along an outer side surface 521C of the body 521. The casing 510 houses at least the part of the body 521 of the strain generator 520 because the lower end and the upper end of the body 521 project from the casing 510.

The lower casing 510L includes a bottom plate 511, a lower surface 511L, a side wall 511S, an opening 512L, and a wall 513L. The lower surface 511L is an example of the first surface, and the bottom plate 511 of the lower casing 510L including the lower surface 511L is an example of the first wall. The opening 512L is an example of the first opening. The wall 513L is an example of the facing wall.

The lower surface 511L is a lower surface of the detection device 500 and is a lower surface of the casing 510. However, the lower surface 521A of the strain generator 520 projects downward of the lower surface 511L. The side wall 511S is provided along the outer periphery of the bottom plate 511, and extends in the +Z direction from the bottom plate 511.

The lower casing 510L includes an opening 512L (see FIG. 31A) at the center of a portion of the bottom plate 511 on the -Y direction side, the portion being configured to house the strain generator 520. The opening 512L is circular in the plan view, and has an opening shape that conforms to the planar shape of the lower end of the body 521 of the strain generator 520.

The opening 512L and the wall 513L form a housing, i.e., a space configured to house the strain generator 520, together with an opening 512U and a wall 513U of the upper casing 510U. The space enclosed by the opening 512L communicates (connects) with the space enclosed by the wall 513L, and the space enclosed by the wall 513L communicates (connects) with the space enclosed by the wall 513U and the opening 512U. The wall 513L and the wall 513U are apart from each other in the vertical direction, but are closed at the joint between the lower casing 510L and the upper casing 510U.

As illustrated in FIGS. 33A and 33B, the lower end of the body 521 of the strain generator 520 is inserted into the opening 512L. The size and shape of the opening 512L are adjusted in the plan view such that substantially no gap is formed with respect to the outer side surface of the lower end of the body 521 in a state in which the lower end of the body 521 of the strain generator 520 is inserted.

As illustrated in FIG. 32A and FIGS. 33A and 33B, the wall 513L is a cylindrical wall provided along the periphery of the opening 512L, and extends upward from the upper surface of the bottom plate 511. The wall 513L expands such that the inner diameter thereof increases as the inner circumferential surface inward in the radial direction of the lower casing 510L goes upward. That is, the inner circumferential surface of the wall 513L has a shape like a side surface of a truncated cone that is turned upside down.

The wall 513L faces the outer side surface 521C of the body 521 of the strain generator 520 in a state in which the strain generator 520 is disposed in the space (housing) enclosed by the wall 513L of the lower casing 510L. In this state, the O-ring 560 attached to the lower side of the strain generator 520 contacts the inner circumferential surface of the wall 513L. The O-ring 560 is compressed between the inner circumferential surface of the wall 513L and the body 521 of the strain generator 520. The lower O-ring 560 is at the position of the second O-ring.

The height of the wall 513L relative to the bottom plate 511 is equal to the height of a lower flange 522 of the strain generator 520 relative to the bottom plate 511 in a state in which the strain generator 520 is inserted into the opening 512L. The lower flange 522 is an example of the first flange. The wall 513L includes projections 513LA (see FIGS. 32A and 32B and FIGS. 33A and 33B) projecting inward in the plan view at four locations on the ±X direction sides and on the ±Y direction sides. The projections 513LA are located at the upper end of the wall 513L, and are provided at four locations in the circumferential direction of the upper end of the wall 513L. The projections 513LA are a part of the wall 513L, and project inward of a projection 513LA-free portion of the upper end of the wall 513L in the radial direction of the lower casing 510L in the plan view.

Four cutout portions 522A of the lower flange 522 of the two flanges 522 of the strain generator 520 contact the four projections 513LA. The inner circumferential surface of the wall 513L increases in the inner diameter thereof as the wall 513L goes upward. In other words, the inner circumferential surface of the wall 513L decreases in the inner diameter thereof toward the opening 512L as the wall 513L goes downward. As a result, the lower flange 522 of the strain generator 520 is engaged, thereby preventing the strain generator 520 from being removed. As long as the number of the projections 513LA is at least one, the projections 513LA may be provided in accordance with the cutout portions 522A.

As illustrated in FIG. 31A and FIGS. 33A and 33B, the lower casing 510L houses the wiring board 540 radially outward of the portion in which the strain generator 520 is disposed.

As illustrated in FIG. 31A and FIGS. 33A and 33B, the upper casing 510U has substantially the same shape as that of the lower casing 510L, and includes an upper surface 511U and the opening 512U. The upper casing 510U has a shape in which the top and the bottom of the lower casing 510L are inverted, and is an example of the second wall. The upper surface 511U is an example of the second surface, and the opening 512U is an example of the second opening. The upper surface 511U is an upper surface of the detection device 500 and is an upper surface of the casing 510. However, the upper surface 521B of the strain generator 520 projects upward of the upper surface 511U.

The opening 512U is formed at the same position as that of the opening 512L of the lower casing 510L in the plan view, and has the same opening shape. The inner circumferential surface of the wall 513U communicates with the opening 512U, and the inner diameter of the inner circumferential surface of the wall 513U increases toward the lower side. Thus, the wall 513U has a shape in which the top and the bottom of the wall 513L of the lower casing 510L are inverted. The inner circumferential surface of the wall 513U has a shape like a side surface of a truncated cone.

As illustrated in FIGS. 33A and 33B, the space enclosed by the opening 512U and the wall 513U communicates with the space enclosed by the wall 513L and the opening 512L in a state in which the upper casing 510U is attached to the lower casing 510L.

The upper end of the body 521 of the strain generator 520 is inserted into the opening 512U. The size and shape of the opening 512U are adjusted in the plan view such that substantially no gap is formed with respect to the outer side surface of the upper end of the body 521 in a state in which the upper end of the body 521 of the strain generator 520 is inserted.

In this state, the O-ring 560 attached to the upper side of the strain generator 520 contacts the inner peripheral surface of the wall 513U. The O-ring 560 is compressed between the inner peripheral surface of the wall 513U and the body 521 of the strain generator 520. The upper O-ring 560 is an example of the second O-ring.

The inner circumferential surface of the wall 513U decreases in the inner diameter thereof toward the opening 512U as the wall 513U goes upward. As a result, the upper flange 522 of the strain generator 520 is engaged, and the strain generator 520 is prevented from being removed upward. The upper flange 522 is an example of the second flange.

As an example, unlike the wall 513L of the lower casing 510L, the wall 513U does not include a projection corresponding to the projection 513LA. Therefore, the cutout portion 522A of the upper flange 522 of the strain generator 520 is not engaged with the upper casing 510U. However, the projection corresponding to the projection 513LA may be provided at the wall 513U of the upper casing 510U, thereby engaging the upper casing 510U with the cutout portion 522A of the upper flange 522 of the strain generator 520. Alternatively, the wall 513U of the upper casing 510U may include a projection without including the projection 513LA of the wall 513L of the lower casing 510L.

As illustrated in FIGS. 33A and 33B, the upper casing 510U is fixed to the lower casing 510L as illustrated in FIGS. 30A and 30B by inserting screws 515 into screw holes and fastening the screws 515 to the screw holes of the lower casing 510L, in a state in which the strain generator 520 and the wiring board 540, on which the communication controller, the antenna, and the like are mounted, are housed in the inner space enclosed by the lower casing 510L. The upper casing 510U is an upper cover for the lower casing 510L. The detection device 500 is completed by fastening the lower casing 510L and the upper casing 510U with the screws 515 in a state in which the strain generator 520 and the wiring board 540, on which the communication controller, the antenna, and the like are mounted, are housed in the inner space between the upper casing 510U and the lower casing 510L. At this time, the opening 512L of the lower casing 510L and the opening 512U of the upper casing 510U are sealed with the two O-rings 560. Also, as illustrated in FIG. 31A, an O-ring 575A is disposed at the outer joints of the lower casing 510L and the upper casing 510U in the radial direction, and O-rings 575B are disposed in the screw holes for passage of the screws 515. Therefore, in a state in which the strain generator 520 is attached to the lower casing 510L and the upper casing 510U, the gaps between the lower casing 510L and the upper casing 510U, and the strain generator 520 are sealed with the O-rings 560, and the joints between the lower casing 510L and the upper casing 510U are sealed with the O-rings 575A and 575B. Thus, the detection device 500 has a waterproof structure.

The strain generator 520 includes the body 521, the two flanges 522, the four cutout portions 522A, and the through-hole 523. The strain generator 520 is preferably formed of a metal material, such as stainless steel or the like.

The body 521 is a portion enclosing the through-hole 523, and includes the lower surface 521A located at the lower end, the upper surface 521B located at the upper end, and the outer side surface 521C. The lower surface 521A is an example of the first end surface, and the upper surface 521B is an example of the second end surface. The lower end of the body 521 on the lower side on which the lower surface 521A exists is an example of the first end, and the upper end of the body 521 on the upper side on which the upper surface 521B exists is an example of the second end. The outer side surface 521C is an example of the first outer side surface. The strain generator 520 has an octagonal shape formed by chamfering the four corners of a square to have smooth convex curves in the plan view. The through-hole 523 that is circular is located at the center of the strain generator 520.

As illustrated in FIGS. 33A and 33B, the lower end of the body 521 is inserted into the opening 512L of the lower casing 510L, and the lower surface 521A projects downward of the lower surface 511L of the lower casing 510L. As illustrated in FIGS. 33A and 33B, the upper end of the body 521 is inserted into the opening 512U of the upper casing 510U, and the upper surface 521B projects upward of the upper surface 511U of the upper casing 510U.

The outer side surface 521C is an outer side surface of the body 521, and faces the walls 513L and 513U in a state in which the strain generator 520 is disposed in the space enclosed by the wall 513L of the lower casing 510L and the wall 513U of the upper casing 510U. The outer side surface 521C is provided with the two flanges 522 at two upper and lower positions. The flange 522 is an annular projection, and projects radially outward of the outer side surface 521C. The cutout portion 522A is provided at four locations of each flange 522, i.e., four locations on the ±X direction sides and on the ±Y direction sides. The cutout portion 522A is a portion obtained by cutting out the outer periphery of the flange 522, which is an annular projection. The cutout portion 522A is offset radially inward of a cutout portion 522A-free portion of the outer periphery of the flange 522.

As described above, the cutout portion 522A of the lower flange 522 is engaged with the projection 513LA of the wall 513L of the lower casing 510L. However, the cutout portion 522A of the upper flange 522 is not engaged with the wall 513L of the upper casing 510U. The cutout portion 522A of the upper flange 522 is formed at the same time as the formation of the cutout portion 522A of the lower flange 522. The upper flange 522 need not be provided with the cutout portion 522A. The following description is made in relation to a case in which the body 521 of the strain generator 520 is provided with two flanges. However, three or more flanges 522 may be provided in the axial direction (Z direction) of the body 521.

In a state in which the strain generator 520 is disposed in the space enclosed by the wall 513L of the lower casing 510L and the wall 513U of the upper casing 510U, the cutout portion 522A is engaged with the projection 513LA of the lower casing 510L. Thus, rotation of the strain generator 520 with respect to the casing 510 can be suppressed. The upper O-ring 560 is fitted on the upper side of the upper flange 522, and the lower O-ring 560 is fitted on the lower side of the lower flange 522.

The lower O-ring 560 is compressed between the lower flange 522 and the inner peripheral surface of the wall 513L of the lower casing 510L. The upper O-ring 560 is compressed between the upper flange 522 and the inner peripheral surface of the wall 513U of the upper casing 510U. In this state, the two upper and lower flanges 522 are held by the upper and lower walls 513L and 513U via the O-rings 560. Therefore, it is possible to prevent the strain generator 520 from falling out from the openings 512L and 512U. The number of the cutout portions 522A may be at least one.

The through-hole 523 is formed so as to connect the lower surface 521A and the upper surface 521B at the center of the body 521 in the plan view. The bolt of the fastening mechanism is inserted into the through-hole 523, and thus the through-hole 523 has an opening size that conforms to the plane size of the bolt. The through-hole 523 is a cylindrical hole, and connects the lower surface 521A and the upper surface 521B of the strain generator 520.

The fastening axial force of the direction (Z direction) passing through the through-hole 523 is applied to the lower surface 521A and the upper surface 521B of the strain generator 520 in a state in which the fastening mechanism and the to-be-fastened member are in contact with each other. As a result, the strain generator 520 is compressed in the vertical direction, and the strain generator 520 bends such that the outer side surface 521C expands outward, thereby generating strain.

As illustrated in FIG. 31B, the strain sensor 130 is provided at positions corresponding to the four cutout portions 522A-including positions of the outer side surface 521C of the body 521 of the strain generator 520.

The strain sensor 130 includes one or more strain detection elements, and is configured to detect strain of the strain generator 520. For example, the strain detection elements for use are each a strain-resisting element that changes in resistance value in accordance with the amount of strain. Four strain detection elements may be provided and connected in a bridge.

The wiring board 540 is, for example, a wiring board of FR-4 standard or the like. The wiring board 540 has a Y shape in the plan view, and is housed in the inner space between the lower casing 510L and the upper casing 510U.

When the detection device 500 as described above is provided between the nut 22 and the to-be-fastened member 30 through the bolt 21 (see FIG. 10) as in the detection device 100 of Embodiment 1, strain corresponding to the fastening torque of the nut 22 is generated in the strain generator 520. Therefore, the reader of the detection device 500 can determine the fastening state of the nut 22 based on a voltage value indicated by a strain detection signal received from the detection device 500.

### <Effects>

The detection device 500 includes: the strain generator 520 that includes the body 521 including the lower end and the upper end, and the through-hole 523 penetrating through the body 521 in the direction that connects the lower side on which the lower end is located and the upper side on which the upper end is located, where the bolt 21 of the fastening mechanism 20 is inserted into the through-hole 523; the strain sensor 130 that is configured to detect strain of the strain generator 520 caused by the fastening axial force that is applied by the fastening mechanism 20 in the extending direction of the through-hole 523; and the casing 510 that is configured to house at least the part of the body 521 of the strain generator 520 along the outer side surface of the body 521. The strain generator 520 includes the flange 522 that projects outward, in the plan view, of the outer side surface of the body 521, in an opening surface view of the through-hole 523. The flange 522 includes the cutout portion 522A that is at the outer periphery of the flange 522 and is cut out inward in the opening surface view of the through-hole 523. The casing 510 includes the walls 513L and 513U facing the outer periphery of the flange 522. The walls 513L and 513U include the projection that projects inward in the plan view and is housed in the cutout portion 522A. Therefore, the cutout portion 522A is engaged with the projection 513LA, and rotation of the strain generator 520 with respect to the casing 510 can be suppressed.

Therefore, it is possible to provide the detection device 500 in which rotation of the strain generator 520 is suppressed.

Also, the body 521 includes the plurality of flanges 522. The plurality of flanges 522 are provided at the outer side surface of the body 521 so as to be apart from each other along the penetrating direction of the through-hole 523. The strain sensor 130 is provided at portions of the outer side surface of the body 521, the portions being between the plurality of flanges 522. Therefore, the casing 510 can stably retain the strain generator 520 on the upper and lower sides of the casing 510, and the fastening force can be stably detected.

Also, the detection device 500 further includes the lower O-ring 560 and the upper O-ring 560. The plurality of flanges 522 include: the lower flange 522 disposed on the lower side in the penetrating direction of the through-hole 523; and the upper flange 522 disposed on the upper side in the penetrating direction of the through-hole 523. The lower O-ring 560 is provided between the lower flange 522 and the casing 510 in a compressed state, and the upper O-ring 560 is provided between the upper flange 522 and the casing 510 in a compressed state. Therefore, it is possible to provide the detection device 500 that can prevent water and dust from entering the space enclosed by the casing 510 and the strain generator 520 from between the casing 510 and the strain generator 520. Also, the provided detection device 500 has a waterproof structure, and is highly reliable.

Also, the detection device 500 further includes a communicator configured to be activated by the power of a signal transmitted from the reader and radiate a signal including data corresponding to strain detected by the strain sensor 130. The data corresponding to strain is, for example, a fastening force. Therefore, the data corresponding to strain can be obtained by the reader, and the fastening force can be measured remotely by utilizing wireless communication without the need for a worker or the like to directly measure the fastening force. As a result, the measurement of the fastening force can be very readily performed. Also, the detection device 500 is activated by the power of the signal transmitted from the reader, and no battery is necessary.

### <Modified Examples of Embodiment 5>

In the following, the differences from the detection device 500 of Embodiment 5 will be mainly described. Components similar to those of the detection device 500 of Embodiment 5 are denoted by the same reference signs, and description thereof will be omitted. In the drawings, only some of the reference signs are shown.

### <First Modified Example of Embodiment 5>

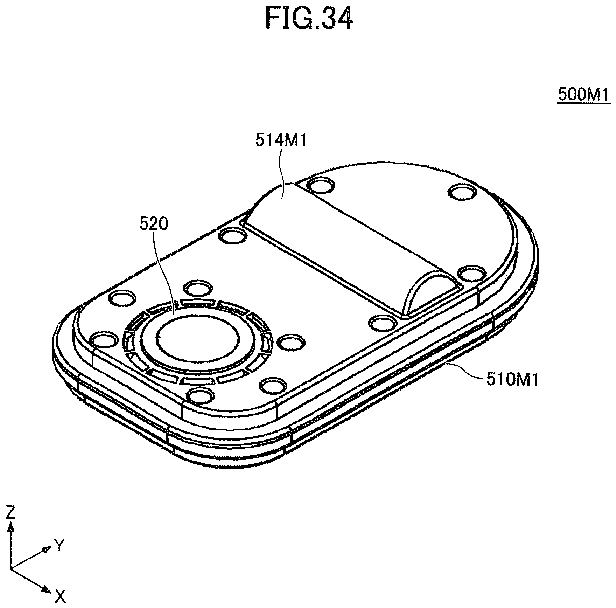

FIG. 34 is a view illustrating a detection device 500M1 of the first modified example of Embodiment 5. The structure of the casing 510M1 of the detection device 500M1 is different from that of the casing 510 of the detection device 500 of Embodiment 5. The casing 510M1 is larger on the +Y direction side than a portion in which the strain generator 520 is housed, and includes a housing 514M1 configured to house a battery. The outer shape of the housing 514M1 of the casing 510M1 is curved in accordance with the shape of the battery.

### <Second Modified Example of Embodiment 5>

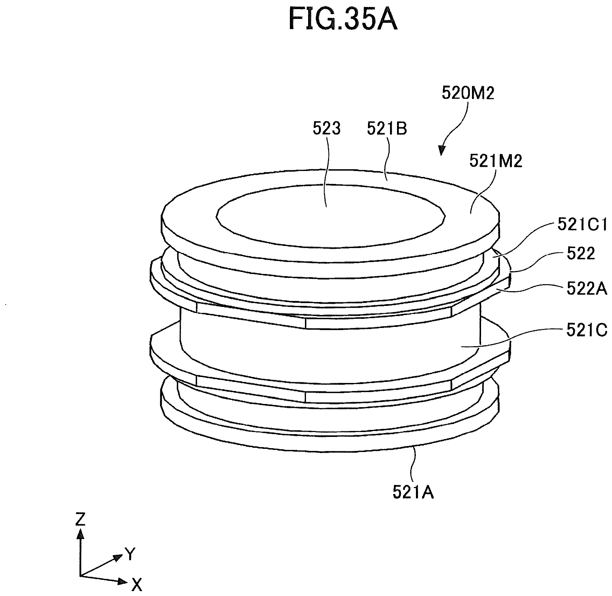

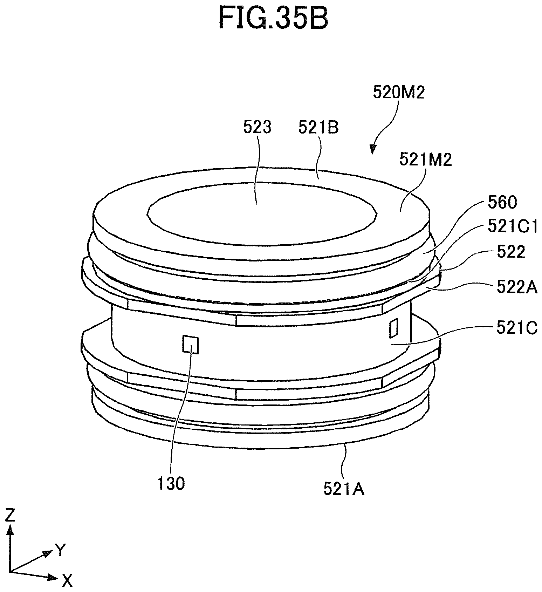

FIGS. 35A and 35B are views illustrating the strain generator 520M2 of the second modified example of Embodiment 5. FIG. 35B illustrates a state in which the strain sensor 130 and the O-ring 560 are attached to the strain generator 520M2.

A body 521M2 of the strain generator 520M2 includes the lower surface 521A, the upper surface 521B, and the outer side surface 521C. The outer side surface 521C is provided with a groove 521C1 for fitting and positioning of the O-ring 560. Therefore, the O-ring 560 can be readily positioned, and displacement thereof can be suppressed.

### <Third Modified Example of Embodiment 5>

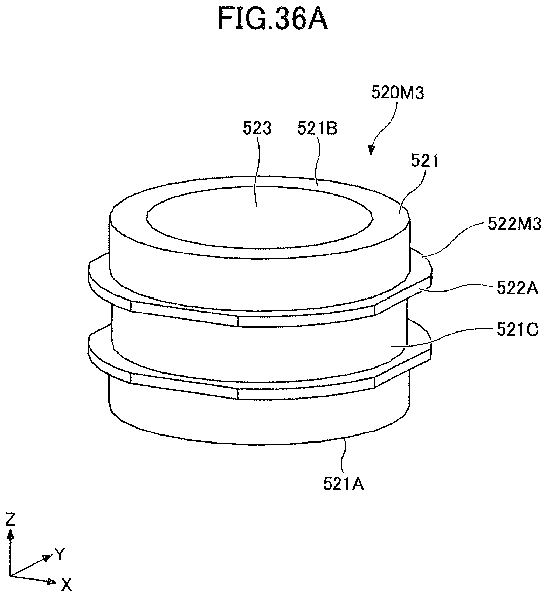

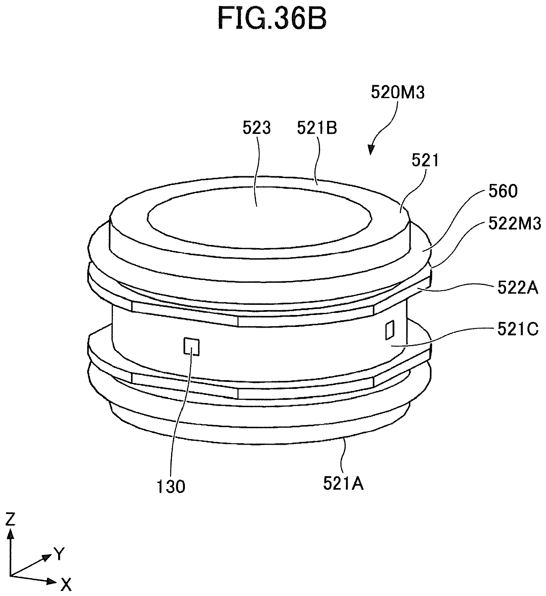

FIGS. 36A and 36B are views illustrating the strain generator 520M3 of the third modified example of Embodiment 5. FIG. 36B illustrates a state in which the strain sensor 130 and the O-ring 560 are attached to the strain generator 520M3.

A flange 522M3 of the strain generator 520M3 is smaller than the flange 522 of the strain generator 520 of Embodiment 5 in terms of the amount of projection in the radial direction. The two O-rings 560 are fitted above and below the two flanges 522M3. The strain generator 520M3 including the flanges 522M3 projecting in small amounts corresponds to a case in which the inner peripheral surface of the casing (not illustrated) is parallel to the outer side surface 521C of the body 521. The O-ring 560 is compressed between the outer side surface 521C and the inner peripheral surface of the casing parallel to the outer side surface 521C.

### <Fourth Modified Example of Embodiment 5>

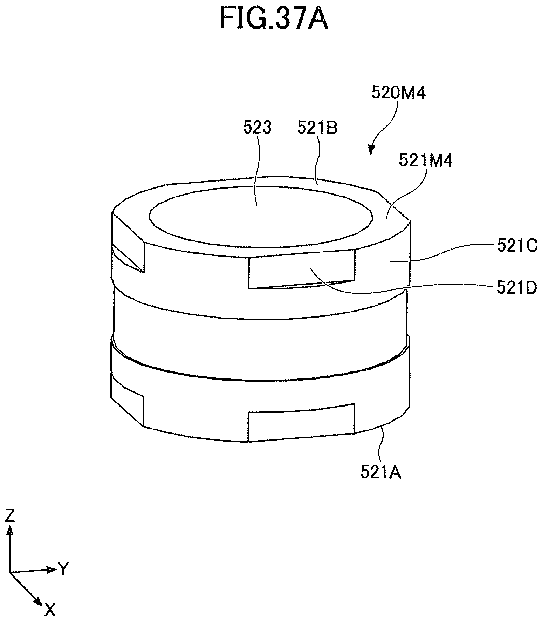

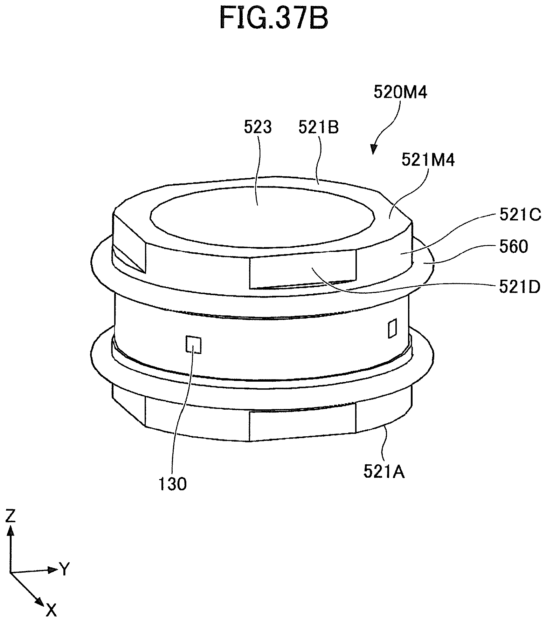

FIGS. 37A and 37B are views illustrating the strain generator 520M4 of the fourth modified example of Embodiment 5. FIG. 37B illustrates a state in which the strain sensor 130 and the O-ring 560 are attached to the strain generator 520M4.

The strain generator 520M4 has a configuration in which a cutout portion 521D is provided above and below the outer side surface 521C of a body 521M4 without providing a flange. Also, the outer side surface 521C is such that the size in the radial direction of a portion between lower and upper portions is smaller than the sizes in the radial direction of the lower and upper portions. Thus, even if using the strain generator 520M4 in which the cutout portion 521D is provided in the body 521M4 without providing a flange, rotation of the strain generator 520 can be suppressed. As an example, the O-ring 560 is compressed between the outer side surface 521C and the inner peripheral surface of the casing parallel to the outer side surface 521C, similar to the third modified example.

### <Fifth Modified Example of Embodiment 5>

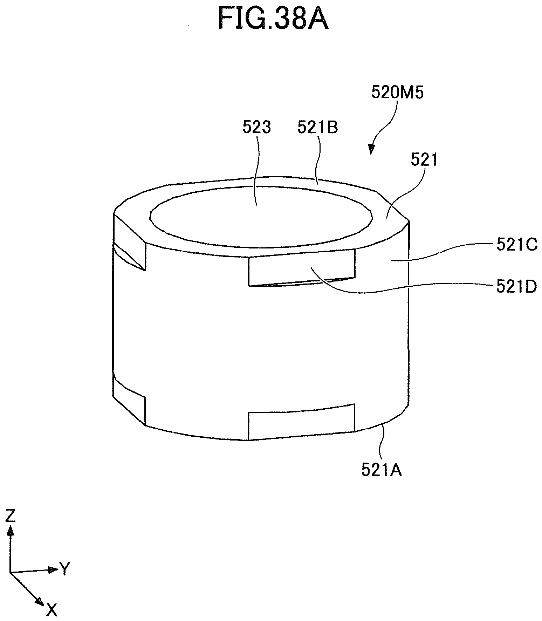

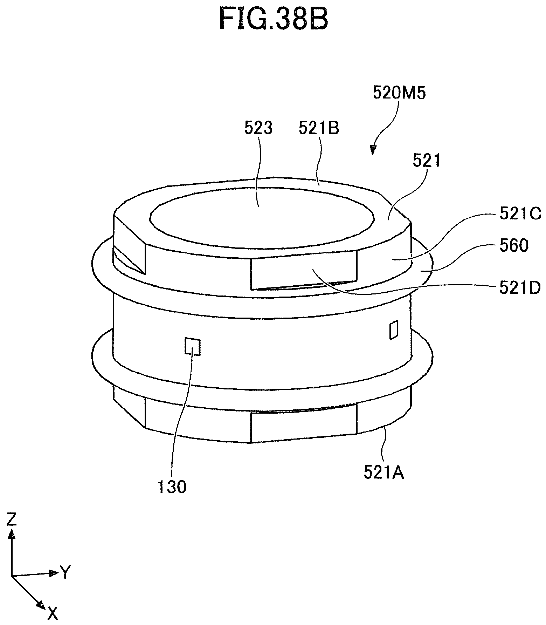

FIGS. 38A and 38B are views illustrating a strain generator 520M5 of the fifth modified example of Embodiment 5. FIG. 38B illustrates a state in which the strain sensor 130 and the O-ring 560 are attached to the strain generator 520M5.

The strain generator 520M5 includes the body 521 the same as the body 521 of the strain generator 520M4 of the fourth modified example of Embodiment 5 except that the size of the body 521 in the radial direction is uniform from the lower surface 521A to the upper surface 521B.

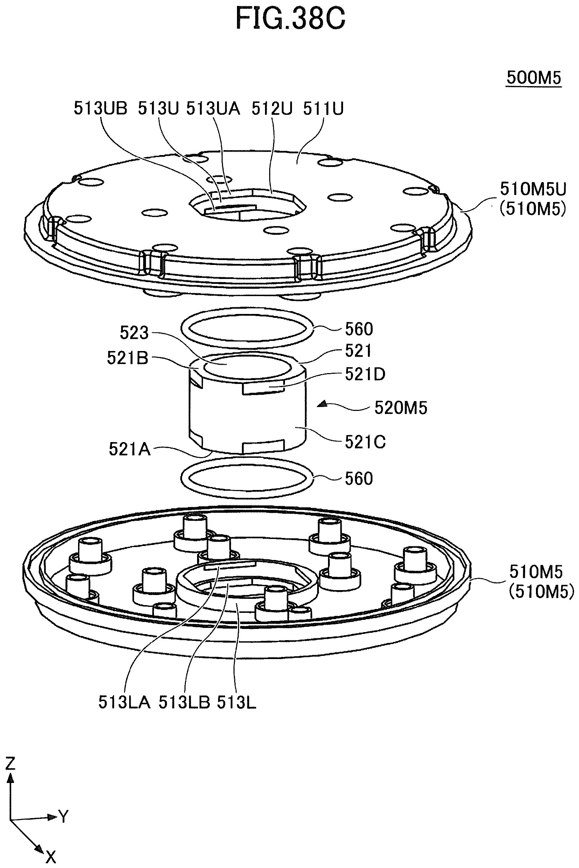

FIG. 38C is a view illustrating an exploded view of a detection device 500M5 including the strain generator 520M5 of the fifth modified example of Embodiment 5. In FIG. 38C, illustration of the screw 515 and the O-rings 575A and 575B (see FIG. 31A) is omitted.

The casing 510M5 of the detection device 500M5 includes a lower casing 510M5L and an upper casing 510M5U. The lower casing 510M5L includes: a projection 513LA projecting radially inward in the opening 512L located at the lower end of the wall 513L; and a projection 513LB projecting radially inward at the lower end of the wall 513L. The inner circumferential surface between the lower end and the upper end of the wall 513L is increased in size in the radial direction for fitting of the O-ring 560, and is recessed radially outward over the entire circumference of the inner circumferential surface of the wall 513L.

The upper casing 510M5U includes the wall 513U. Similar to the wall 513L of the lower casing 510M5L, the wall 513U includes: a projection 513UA projecting radially inward in the opening 512U located at the upper end of the wall 513U; and a projection 513UB projecting radially inward at the lower end of the wall 513U. The inner circumferential surface between the lower end and the upper end of the wall 513U is increased in size in the radial direction for fitting of the O-ring 560, and is recessed radially outward over the entire circumference of the inner circumferential surface of the wall 513U.

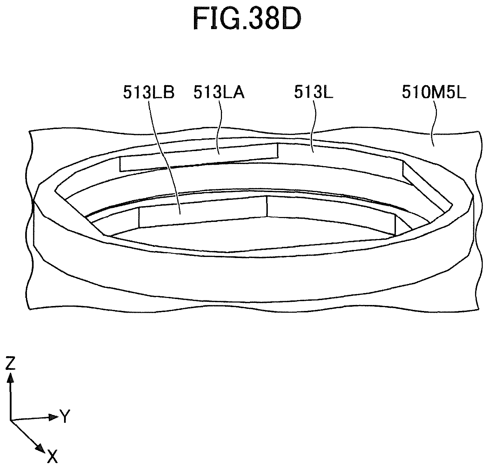

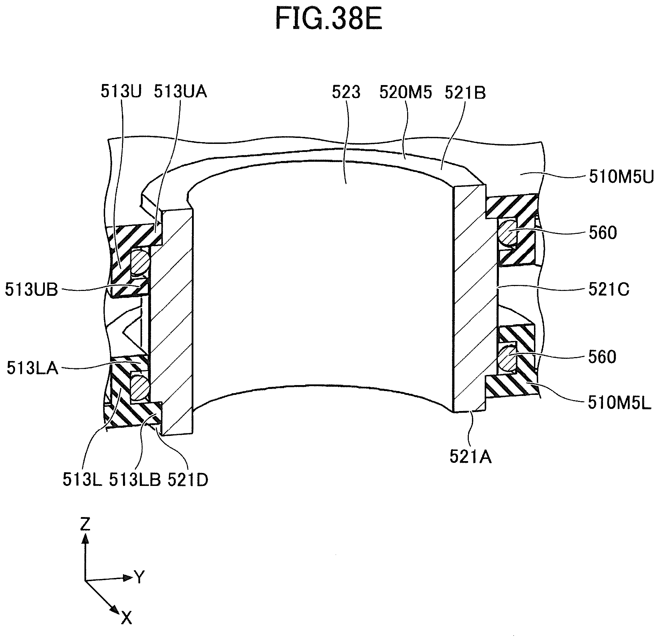

FIGS. 38D and 38E are partially enlarged views of the detection device 500M5. As illustrated in FIG. 38D, the lower O-ring 560 is fitted into a recess between the projections 513LA and 513LB of the wall 513L of the lower casing 510M5L. The same applies to the upper casing 510M5U side.

Also, as illustrated in FIG. 38E, the cutout portion 521D below the strain generator 520M5 is engaged with the projection 513LA of the wall 513L of the lower casing 510M5L, and the projection 513LB is in contact with the outer side surface 521C. Similarly, the cutout portion 521D above the strain generator 520M5 is engaged with the projection 513UA of the wall 513U of the upper casing 510M5U, and the projection 513UB is in contact with the outer side surface 521C.

By using the casing 510M5 as described above, rotation of the strain generator 520M5 can be suppressed. The lower O-ring 560 is compressed between the outer side surface 521C and the inner peripheral surface of the wall 513L of the lower casing 510M5L parallel to the outer side surface 521C. The upper O-ring 560 is compressed between the outer side surface 521C and the inner peripheral surface of the wall 513U of the upper casing 510M5U parallel to the outer side surface 521C.

The detection device 500M5 includes: the strain generator 520M5 that includes the body 521 including the lower end and the upper end, and the through-hole 523 penetrating through the body 521 in the direction that connects the lower side on which the lower end is located and the upper side on which the upper end is located, where the bolt 21 of the fastening mechanism 20 is inserted into the through-hole 523; the strain sensor 130 that is configured to detect strain of the strain generator 520M5 caused by the fastening axial force that is applied by the fastening mechanism 20 in the extending direction of the through-hole 523; and the casing 510M5 that is configured to house at least the part of the body 521 of the strain generator 520M5 along the outer side surface of the body 521. The strain generator 520M5 includes the cutout portion 521D that is cut out inward of the outer side surface of the body 521 in the plan view. The casing 510M5 includes the walls 513L and 513U facing the outer side surface. The walls 513L and 513U include the projections 513LA and 513UA that project inward in the plan view and are housed in the cutout portion 521D. Therefore, the cutout portion 521D is engaged with the projections 513LA and 513UA, and rotation of the strain generator 520M5 with respect to the casing 510M5 can be suppressed.

Therefore, it is possible to provide the detection device 500M5 in which rotation of the strain generator 520M5 is suppressed.

### <Sixth Modified Example of Embodiment 5>

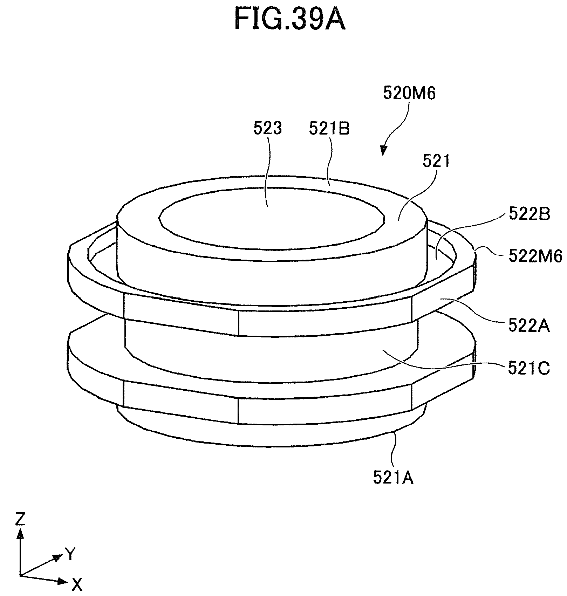

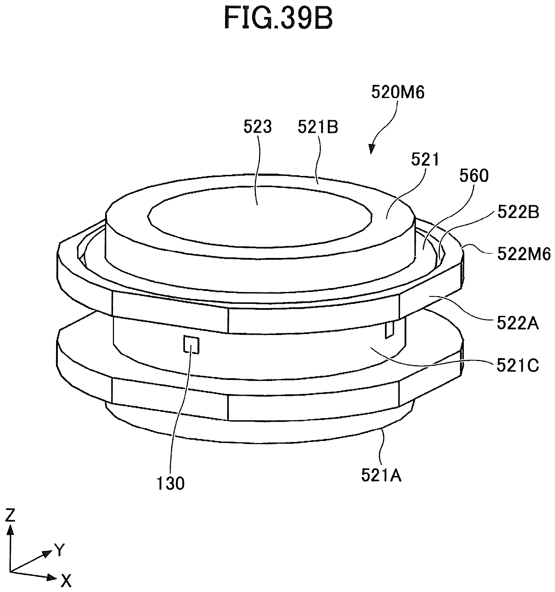

FIGS. 39A and 39B are views illustrating the strain generator 520M6 of the sixth modified example of Embodiment 5. FIG. 39B illustrates a state in which the strain sensor 130 and the O-ring 560 are attached to the strain generator 520M6.

A flange 522M6 of the strain generator 520M6 is the same as the flange 522M3 of the third modified example of Embodiment 5 except that a recess 522B for fitting of the O-ring 560 is provided. FIGS. 39A and 39B illustrate the recess 522B of the upper flange 522M6. The recess 522B of the upper flange 522M6 is recessed downward along the outer side surface 521C from the upper surface of the upper flange 522M6. The recess 522B as described above is provided over the entire circumference of the outer side surface 521C. The size of the recess 522B conforms to that of the O-ring 560.

The lower flange 522M6 is also provided with a recess similar to the recess 522B of the upper flange 522M6. The recess of the lower flange 522M6 is recessed upward along the outer side surface 521C from the lower surface of the lower flange 522M6.

When using the strain generator 520M6 as described above, the O-ring 560 is readily positioned, and displacement thereof can be suppressed. Also, rotation of the strain generator 520M6 can be suppressed. The lower O-ring 560 is vertically compressed between the inner side surface parallel to the XY plane of the lower casing 510L, and the lower flange 522. The upper O-ring 560 is vertically compressed between the inner surface parallel to the XY plane of the upper casing 510U, and the upper flange 522.

Although the detection devices of the illustrative embodiments of the present disclosure have been described above, the present disclosure is not limited to the specifically disclosed embodiments. Various modifications and changes are possible without departing from the scope of the claims.

The present international application claims priority to Japanese Patent Application No. 2022-057382 filed on March 30, 2022, the entire contents of which are incorporated herein by reference.

### REFERENCE SIGNS LIST

- 20: Fastening mechanism
- 21: Bolt
- 21A: Bolt shaft
- 22: Nut
- 30: To-be-fastened member
- 100,100A,100B: Detection device
- 110: Casing
- 110L: Lower casing
- 110U: Upper casing (example of second wall)
- 111: Bottom plate (example of first wall)
- 111A: Engagement portion
- 111L: Lower surface (example of first surface)
- 111U: Upper surface (example of second surface)
- 112L: Opening (example of first opening)
- 112U: Opening (example of second opening)
- 113L: Rib (example of facing wall)
- 113LA: Recess
- 113LB: Cutout portion
- 113LD: Projection
- 120,120B,120C,120D,120E: Strain generator
- 121: Body
- 121A: Lower surface (example of first end surface)
- 121B: Upper surface (example of second end surface)
- 121C: Outer side surface (example of the first outer side surface)
- 122,122C: Projection
- 122D,122E: Recess
- 123: Through-hole
- 130: Strain sensor
- 140,140A: Wiring board
- 145A: Signal line
- 150: Sealing resin (example of filler)
- 200: Detection device
- 220: Strain generator
- 221: Body
- 222: Recess
- 223: Through-hole
- 224: Base
- 224A: Lower surface (example of third end surface)
- 224B: Upper surface (example of second end surface)
- 224C: Outer side surface (example of second outer side surface)
- 225: Extension
- 225C: Outer side surface (example of first outer side surface)
- 226: Enclosing wall
- 226A: Lower surface (example of first end surface)
- 320: Strain generator
- 321: Body
- 321A: Lower surface (example of first end surface)
- 321B: Upper surface (example of second end surface)
- 321C: Outer side surface (example of first outer side surface)
- 322: Projection
- 323: Through-hole
- 324A: First recess
- 324B: Second recess
- 420: Strain generator
- 421: Body
- 421A: Lower surface
- 421B: Upper surface
- 4210: Outer side surface
- 421D: Recess
- 422: Projection
- 423: Through-hole
- 460: O-ring
- 500,500M1,500M5: Detection device
- 510,510M1,510M5: Casing
- 510L,510M5L: Lower casing
- 510U,510M5U: Upper casing
- 511: Bottom plate
- 511L: Lower surface
- 511S: Side wall
- 511U: Upper surface
- 512L: Opening
- 512U: Opening
- 513L: Wall
- 513LA: Projection
- 513LB: Projection
- 513U: Wall
- 513UA: Projection
- 513UB: Projection
- 514M1: Housing
- 515: Screw
- 520,520M2,520M3,520M4,520M5,520M6: Strain generator
- 521: Body
- 521A: Lower surface
- 521B: Upper surface
- 521C: Outer side surface
- 521C1: Groove
- 521D: Cutout portion
- 521M2: Body
- 521M4: Body
- 522,522M3,522M6: Flange
- 522A: Cutout portion
- 522B: Recess
- 523: Through-hole
- 540: Wiring board
- 560: O-ring
- 575A: O-ring
- 575B: O-Ring

## Claims

1. A detection device, comprising:
a strain generator that includes
a body including a first end and a second end, and
a through-hole penetrating through the body in a direction that connects a first side on which the first end is located and a second side on which the second end is located, where a bolt of a fastening mechanism is to be inserted into the through-hole;
a strain sensor that is configured to
detect strain of the strain generator caused by a fastening axial force that is applied by the fastening mechanism in an extending direction of the through-hole; and
a casing that is configured to
house at least a part of the body of the strain generator along a first outer side surface of the body, wherein
the strain generator includes
a projection that projects outward, in a plan view, of the first outer side surface of the body,
the casing includes
a facing wall that faces the first outer side surface, and
the facing wall includes
a recess that is recessed outward in the plan view and is configured to house the projection.

2. The detection device according to claim 1, wherein
the casing includes
a first wall including a first surface located on the first side,
a first opening provided in the first wall,
a second wall including a second surface located on the second side, and
a second opening provided in the second wall,
the first opening, the facing wall, and the second opening form a housing configured to house at least the part of the body of the strain generator,
a first end surface of the first end of the strain generator is exposed from the first opening, and projects toward the first side beyond the first surface in the extending direction of the through-hole, and
a second end surface of the second end of the strain generator is exposed from the second opening, and projects toward the second side beyond the second surface in the extending direction of the through-hole.

3. The detection device according to claim 1 or 2, wherein
a first end surface of the first end of the strain generator and a second end surface of the second end of the strain generator are a flat surface.

4. The detection device according to claim 1 or 2, wherein
the body further includes
a base that includes a third end on the first side and the second end on the second side, and encloses the through-hole,
an extension that extends outward, in the plan view, of a side portion of the base, and
an enclosing wall that projects toward the first side in the extending direction of the through-hole from a portion of the extension on the first side, and encloses a second outer side surface of the base with a gap from the second outer side surface,
a first end surface of the first end is an end surface of the enclosing wall on the first side, and projects toward the first side beyond a third end surface of the third end in the extending direction of the through-hole, and
the first outer side surface is an outer side surface of the extension.

5. The detection device according to claim 1 or 2, wherein
the body includes
a plurality of first recesses that are provided at the first end along a periphery of the through-hole, and are recessed toward the second side in the extending direction of the through-hole and beyond the first end surface of the first end, and
a plurality of second recesses that are provided at the second end along the periphery of the through-hole, and are recessed toward the first side in the extending direction of the through-hole and beyond the second end surface of the second end, and
the plurality of first recesses and the plurality of second recesses are alternately disposed along the periphery of the through-hole.

6. The detection device according to claim 5, wherein
the plurality of first recesses and the plurality of second recesses are disposed so as to have overlapping sections in a direction that encloses the through-hole.

7. A detection device, comprising:
a strain generator that includes
a body including a first end and a second end, and
a through-hole penetrating through the body in a direction that connects a first side on which the first end is located and a second side on which the second end is located, where a bolt of a fastening mechanism is to be inserted into the through-hole;
a strain sensor that is configured to
detect strain of the strain generator caused by a fastening axial force that is applied by the fastening mechanism in an extending direction of the through-hole; and
a casing that is configured to
house at least a part of the body of the strain generator along a first outer side surface of the body, wherein
the strain generator includes
a recess that is recessed inward, in a plan view, of the first outer side surface of the body,
the casing includes
a facing wall that faces the first outer side surface, and
the facing wall includes
a projection that projects outward in the plan view and is configured to be housed in the recess.

8. The detection device according to any one of claims 1 to 7, wherein
a first end surface of the first end contacts one of a nut of the fastening mechanism or a to-be-fastened member fastened by the fastening mechanism, and
a second end surface of the second end contacts another of the nut of the fastening mechanism or the to-be-fastened member fastened by the fastening mechanism.

9. The detection device according to any one of claims 1 to 8, wherein
the projection is positioned, in the extending direction of the through-hole, on the second side of a first end surface of the first end and on the first side of a second end surface of the second end, and
a step is present between the projection and the first end surface, and a step is present between the projection and the second end surface.

10. The detection device according to claim 9, wherein
the casing further includes
an engagement portion that overlaps with the projection in the plan view, projects toward the first outer side surface beyond the facing wall, and is configured to be engaged with a portion of the projection closer to the first end.

11. The detection device according to any one of claims 1 to 10, wherein
the casing further includes
a cutout portion or a hole that is provided in a part of the facing wall, and is for passage of a signal line connected to the strain sensor.

12. The detection device according to any one of claims 1 to 11, further comprising:
a filler that is charged between the first outer side surface of the strain generator and the facing wall of the casing.

13. A detection device, comprising:
a strain generator that includes
a body including a first end and a second end, and
a through-hole penetrating through the body in a direction that connects a first side on which the first end is located and a second side on which the second end is located, where a bolt of a fastening mechanism is to be inserted into the through-hole;
a strain sensor that is configured to
detect strain of the strain generator caused by a fastening axial force that is applied by the fastening mechanism in an extending direction of the through-hole; and
a casing that is configured to
house at least a part of the body of the strain generator along an outer side surface of the body, wherein
the strain generator includes
a flange that projects outward, in a plan view, of the outer side surface of the body, in an opening surface view of the through-hole,
the flange includes
a cutout portion that is at an outer periphery of the flange and is cut out inward in the opening surface view of the through-hole,
the casing includes
a facing wall that faces the outer periphery of the flange, and
the facing wall includes
a projection that projects inward in the plan view and is configured to be housed in the cutout portion.

14. The detection device according to claim 13, wherein
the body includes
a plurality of flanges each being the flange,
the plurality of flanges are provided at the outer side surface of the body so as to be apart from each other along a penetrating direction of the through-hole, and
the strain sensor is provided at portions of the outer side surface of the body, the portions being between the plurality of flanges.

15. The detection device according to claim 13, further comprising:
a first O-ring; and
a second O-ring, wherein
a plurality of flanges each being the flange include
a first flange disposed on the first side in a penetrating direction of the through-hole, and
a second flange disposed on the second side in the penetrating direction of the through-hole,
the first O-ring is provided in a state of being compressed between the first flange and the casing, and
the second O-ring is provided in a state of being compressed between the second flange and the casing.

16. A detection device, comprising:
a strain generator that includes
a body including a first end and a second end, and
a through-hole penetrating through the body in a direction that connects a first side on which the first end is located and a second side on which the second end is located, where a bolt of a fastening mechanism is to be inserted into the through-hole;
a strain sensor that is configured to
detect strain of the strain generator caused by a fastening axial force that is applied by the fastening mechanism in an extending direction of the through-hole; and
a casing that is configured to
house at least a part of the body of the strain generator along an outer side surface of the body, wherein
the strain generator includes
a cutout portion that is cut out inward, in a plan view, of the outer side surface of the body,
the casing includes
a facing wall that faces the outer side surface, and
the facing wall includes
a projection that projects inward in the plan view and is configured to be housed in the cutout portion.

17. The detection device according to any one of claims 1 to 16, further comprising:
a communicator configured to be activated by power of a signal transmitted from a reader and to radiate a signal including data corresponding to the strain detected by the strain sensor.
